# EUROPEAN PATENT APPLICATION

(11) **EP 1 286 549 A2**
(43) Date of publication of application: **26.02.2003**
(21) Application number: 02252839.2
(22) Date of filing: 23.04.2002
(51) Int. Cl.: H04N 7/26

(54) **Receiver/decoder and module for use with a receiver/decoder**

(30) Priority: 21.08.2001 EP 01402202
(71) Applicant: Canal+ Technologies Société Anonyme, 75906 Paris Cedex 15 (FR)
(72) Inventor: Danis, Thierry, c/o Canal+ Technologies S.A., 75906 Paris, CEDEX 15 (FR)
(74) Representative: Cozens, Paul Dennis

(57) **Abstract**

A receiver/decoder (2000) is disclosed comprising a host processor (2002), a co-processor (2004) and a communication channel (2006) for communication between the host processor and the co-processor. By providing two separate processors within the receiver/decoder, greater processing power and flexibility is provided. Preferably, the receiver/decoder further comprises a device, and the co-processor is adapted to run a low-level software process which manages the device. Preferably, the host processor is adapted to run a high-level application adapted to generate a control message, and the communication channel is adapted to transmit the control message from the host processor to the co-processor. By separating the internal functions of the receiver/decoder into high level applications and low level device management and providing the functionality on separate processors, greater independence from the low level aspects of the receiver/decoder can be provided to the applications.

## Description

The invention relates to a receiver/decoder and to a module for use with a receiver/decoder. The invention finds particular application in digital television systems.

Digital television systems transmit television channels to the viewer in digital, rather than analogue, form. The digital channels are encoded into a digital data stream at the transmitter end, and are decoded at the receiver end using a digital receiver/decoder. To allow interactivity, an uplink may be provided, either via the same medium that delivers the television channels, or else via a different medium such as a telephone link. Further types of data, such as digital audio, software and interactive data can be or are also broadcast. As used herein, the term "digital television system" includes for example any satellite, terrestrial, cable and other system.

The term "receiver/decoder" as used herein may connote a receiver for receiving either encoded or non-encoded signals, for example television and/or radio signals, preferably in MPEG format, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4, and the MPEG-4 and other contemplated MPEG standards. In the context of the present patent application, the term includes all variants, modifications or developments of MPEG formats applicable to the field of digital data transmission.

WO 98/43172 (naming Canal+ Societé Anonyme as patent applicant) describes an interface to a device layer of a receiver/decoder, and describes aspects of device management and device interaction in a receiver/decoder. Specifically, a number of procedures are described which may be used by other software of the receiver/decoder to interact with devices.

WO 99/18730 (naming Canal+ Societé Anonyme as patent applicant) describes a receiver/decoder executing a virtual machine, wherein the virtual machine executes a number of applications as processes internal to the virtual machine. An event-based model of communication between the virtual machine processes and a device manager managing devices of the receiver/decoder is also described.

The present invention seeks to address problems identified in the above prior art.

Accordingly, in a first aspect of the invention, there is provided a receiver/decoder comprising a processor, a co-processor and a communication channel for communication between the processor and the co-processor.

By providing two separate processors within the receiver/decoder, greater processing power and flexibility is provided. The processor will sometimes also be referred to herein as the "host processor". Both processor and co-processor may be processors of any kind, including any commercially available processors. Preferably they are programmable processors. Preferably, the two processors control different aspects of the functionality of the receiver/decoder. Alternatively or in addition, further processors may be provided, and the functionality of the receiver/decoder may be divided in any suitable fashion between any number of processors.

Preferably, the receiver/decoder further comprises a device, and the co-processor is adapted to run a low-level software process which manages the device. Preferably, the processor is adapted to run a high-level application adapted to generate a control message, and the communication channel is adapted to transmit the control message from the processor to the co-processor. By separating the internal functions of the receiver/decoder into high level applications and low level device management and providing the functionality on separate processors, greater independence from the low level aspects of the receiver/decoder can be provided to the applications.

By running high-level applications (such as interactive applications) separately on the processor, the invention can provide for more stable operation of the receiver/decoder. Thus if the co-processor ceases to operate for some reason (for example as a result of a crash, or as a result of having to wait for one of the devices to respond to a control message) then the high-level applications may not be disrupted. Conversely, if an application running on the processor ceases to operate (or operate correctly), low level functions of the co-processor may continue uninterrupted.

The communication channel may be a co-processor bus. The device may be a physical device, for example a card reader or a storage device, or it may be a device driver or software device for controlling a physical device. The device may also be a software device not related, or not related directly, to a physical device. The device may also be a device manager for managing one or more software devices, device drivers and/or physical devices.

Preferably, the device comprises an audio/visual interface, and the software process comprises an audio/visual manager for managing the audio/visual interface. In this way, the application running on the processor may control audio/visual aspects of the receiver/decoder by sending a control message to the co-processor.

The term "audio/visual" as used herein preferably connotes either audio or visual matter, or a combination of the two. In the context of a broadcast signal received by a receiver/decoder, the term may encompass subtitle, teletext, synchronisation and other data transmitted in close relation to audio and video components making up a television programme.

Alternatively or in addition, the device may comprise a storage medium; and the software process may comprise a store manager for managing the storage medium. This enables the application to control retrieval and/or storage of information using the storage medium by sending a control message to the co-processor. In fact, the co-processor can manage a variety of different devices associated with the receiver/decoder, such as a conditional access device, tuner device, card reader device, storage device, audio/visual interface and other related devices.

Preferably, the processor is adapted to run a plurality of high-level applications concurrently. This can provide greater flexibility and can allow the processor to, for example, run applications controlling the receiver/decoder at the same time as end-user applications of the receiver/decoder.

This important feature is also provided independently. Accordingly, in a further aspect of the invention, there is provided a receiver/decoder comprising a device; a co-processor for running a low-level software process which manages the device; a processor for running a plurality of high-level applications concurrently, wherein said plurality of high-level applications is adapted to generate a control message; and a communication channel for transmitting the control message from the processor to the co-processor.

Preferably, the processor is adapted to run the plurality of high-level applications as a plurality of concurrent software processes. A software process may be any unit of software adapted to be run concurrently with other units of software. For example, a software process may be a UNIX or POSIX process, or it may be a UNIX or POSIX thread. Generally speaking, it may be any kind of task as used by known multi-tasking operating systems.

Preferably, the receiver/decoder further comprises means for managing the access of control messages from the plurality of concurrent software processes to the co-processor. In this way, problems may be avoided which could be caused by the concurrent access of more than one control message to the co-processor.

This important feature is also provided independently. Accordingly, in a further aspect of the invention, there is provided a receiver/decoder comprising a co-processor for running a software process; a processor for concurrently running a plurality of software processes adapted to each generate respective control messages; a communication channel for transmitting the control messages from the processor to the co-processor; and means for managing the access of control messages from the plurality of concurrent software processes to the co-processor.

Preferably, the means for managing the access of control messages is adapted to prevent the concurrent access of more than a specified number of control messages to the co-processor. Preferably, the specified number is one. In this way, any potential problems that could arise from concurrent access to the co-processor may be avoided. The means for managing the access of control messages may comprise a semaphore, preferably a binary semaphore or mutex semaphore. Binary or mutex semaphores will herein be referred to as mutexes (mutual exclusion objects). Mutexes are well-known and reliable ways of providing mutual exclusion. They are also convenient, since many operating systems provide functions for the management of mutexes, for example POSIX. Alternatively, other suitable means for managing the access of control messages may be used. For convenience and efficiency, the control messages may comprise remote procedure calls.

Preferably, the receiver/decoder comprises means for selecting one of the plurality of concurrent software processes; and means for routing an information message from the co-processor to the selected software process. This can enable the co-processor to send messages to a particular process running on the processor, for example in response to a previous control message.

The receiver/decoder may further comprise a memory shared between the processor and the co-processor. The shared memory may be used to exchange information between the two processors, which may be a more convenient way of exchanging larger amounts of information than using the communication channel. The memory may comprise one or more RAM, ROM and/or FLASH memory modules and/or one or more other memory or storage modules.

In a further aspect of the invention, there is provided a receiver/decoder comprising a processor for concurrently running a plurality of software processes. A process may be any kind of task, thread or process. Providing such a multi-tasking capability may increase the reliability of receiver/decoder software as it can allow for a convenient separation between functions of the receiver/decoder, thus reducing the complexity of the software and simplifying the creation of software for the receiver/decoder. For convenience, the receiver/decoder preferably comprises a multi-tasking real-time operating system for execution on the processor. Using a real-time operating system can allow greater control over time-critical functions of the receiver/decoder (for example, recording or playing back a programme) and leads to greater reliability of such functions.

For further convenience, the multi-tasking real-time operating system may comprise an operating system compatible with at least part of the POSIX standard.

This important feature is also provided independently. Accordingly, in a further aspect of the invention, there is provided a receiver/decoder comprising a processor and a multi-tasking real-time operating system compatible with at least part of the POSIX standard for execution on the processor.

The multi-tasking real-time operating system may comprise a subset of the POSIX standard. An operating system based on a POSIX subset may require less resources in storage and execution and may include only such features of POSIX as are useful in the receiver/decoder environment.

Preferably, the receiver/decoder further comprises a storage device, and a software process, the software process comprising a device manager for managing the storage device. The receiver/decoder may further comprise a first software process for managing the recordal of information to the storage device; and a second software process for managing the retrieval of information from the storage device.

By providing separate concurrent processes for recordal and retrieval of information, information can be more easily recorded and retrieved at the same time. This, for example, makes it easier to provide receiver/decoder software enabling a user to simultaneously watch one television programme whilst recording another. Preferably, the receiver/decoder further comprises a software process for executing an application of the receiver/decoder. In this way, applications may easily be executed whilst information is being recorded and/or retrieved. The software process for executing an application may comprise a virtual machine.

In a further aspect of the invention, there is provided a module for use with a receiver/decoder, comprising means for communicating a control message from one of a plurality of concurrent software processes to a component of the receiver/decoder.

This can enable the software process to better control the component of the receiver/decoder. Preferably, the module further comprises means for preventing the concurrent communication of more than a specified number of control messages by more than one of the plurality of concurrent software processes to the component. Preferably, the specified number is one. This can avoid problems that might occur if the component were to receive multiple control messages at the same time and thus makes the component safe to use in a multi-tasking environment. For convenience, the prevention means preferably comprises a semaphore, preferably a binary or mutex semaphore. For further convenience, the control message may be adapted to be communicated to the component by calling a procedure of the component.

Preferably, the module further comprises means for communicating an information message from the component to one of the plurality of concurrent software processes. This enables two-way communication between the software processes and the component. The component may, for example, send an information message in response to a previous control message. An information message may be any kind of message; for example, where an event-based communication model is used, the information message may relate to an event triggered by the component.

Preferably, the module further comprises means for receiving the information message from the component and means for storing the information message. This provides greater flexibility as the message does not need to be passed on immediately. Preferably, the software process retrieves the event at a suitable time.

For convenience and efficiency, the means for receiving the information message may comprise means for receiving a notification from the component, and means for requesting the information message from the component in response to the notification. For efficiency, the means for storing the information message may comprise a plurality of message queues; means for selecting one of the plurality of message queues and means for storing the information message in the selected message queue.

Preferably, the information message further comprises a reference to said one of the plurality of concurrent software processes as an intended recipient of the information message; and the means for storing the information message further comprises means for selecting one of the plurality of message queues based on the intended recipient. This can enable the module to identify the correct software process to which the message is to be sent and to ensure that the message is sent to the correct process.

Alternatively or in addition, the information message may further comprise a reference to a previous control message received by the component; and the means for storing the information message may further comprise means for selecting one of the plurality of message queues based on the reference to the previous control message. This can enable a distinction to be made between information messages sent by the component which relate to different previous control messages and thus affords greater flexibility.

The module may further comprise means for notifying said one of the plurality of software processes of the receipt of the information message. This can remove the need for the software process to pro-actively, and potentially repeatedly, check whether an information message has been received by the module, and may prevent the software process from waiting unnecessarily for an information message. This can lead to improved efficiency.

Preferably, the module further comprises means for receiving a request for the information message from said one of the plurality of concurrent software processes, and means for communicating the information message to said one of the plurality of concurrent software processes in response to the request. The software process may therefore decide when to retrieve the information message, and thus greater flexibility can be provided.

Preferably, the module further comprises means for communicating an information message from one of the plurality of concurrent software processes to another of the plurality of concurrent software processes. This can enable different processes to better communicate with each other and provides increased flexibility.

Preferably, the module further comprises a subscription manager for managing a subscription service to which at least one of the plurality of concurrent software processes subscribes; means for receiving an information message for the subscription service; and means for sending the information message to at least one subscriber of the subscription service. This can enable processes to send information messages of a particular type or content to other processes interested in messages of that type or content without needing to know the identity of the recipients. Likewise, the recipients need not know the identity of the senders. This can lead to easier and more flexible communication between processes. For convenience and efficiency, the subscription manager preferably comprises a routing process for receiving the information message and for sending the information message to at least one subscriber of the subscription service.

The module may further comprise means for managing a timer, and means for sending an information message to one of the plurality of concurrent software processes in response to the timer attaining a defined state. This can enable better management of time-critical activities or functions by the processes, or of activities or functions in which time is at least of some relevance.

Preferably, the component comprises a device manager for managing a device of the receiver/decoder. Thereby, previously discussed advantages of the module can be afforded to device management functions.

In a further aspect of the invention, there is provided a module for controlling a receiver/decoder, comprising a module and a component as described above.

In a further aspect of the invention, there is provided a module for controlling a receiver/decoder, comprising a module for executing an end-user application of the receiver/decoder, and a module as described above. Preferably, the module for executing an end-user application comprises a virtual machine.

In yet further aspects of the invention there are provided a signal tangibly embodying a module as described above; a receiver/decoder comprising a module as described above; a receiver/decoder adapted to execute a module as described above; a broadcast system comprising such a receiver/decoder and a broadcast centre; a computer program product comprising a module as described above; and a computer readable medium having stored thereon such a computer program product.

In a further aspect of the invention, there is provided a method of controlling a component of a receiver/decoder, comprising communicating a control message from one of a plurality of concurrent software processes executing in the receiver/decoder to the component of the receiver/decoder.

Preferably, the method further comprises preventing the concurrent communication of more than a specified number of control messages by several of the plurality of concurrent software processes to the component. Preferably, the specified number is one. Preferably, preventing the concurrent communication of more than a specified number of control messages comprises acquiring a semaphore or locking a mutex (mutual exclusion object). Preferably, communicating the control message to the component comprises calling a procedure of the component.

Preferably, the method further comprises communicating an information message from the component to one of the plurality of concurrent software processes. Preferably, the method further comprises receiving the information message from the component and storing the information message. Preferably, receiving the information message comprises receiving a notification from the component, and requesting the information message from the component in response to the notification. Preferably, storing the information message comprises selecting one of a plurality of message queues and storing the information message in the selected message queue.

Preferably, storing the information message further comprises inspecting a reference in the information message to said one of the plurality of concurrent software processes as an intended recipient of the information message; and selecting one of the plurality of message queues based on the intended recipient. Alternatively or in addition, storing the information message may further comprise inspecting a reference in the information message to a previous control message received by the component; and selecting one of the plurality of message queues based on the reference to the previous control message.

Preferably, the method further comprises notifying said one of the plurality of software processes of the receipt of the information message. Preferably, the method further comprises receiving a request for the information message from said one of the plurality of concurrent software processes; and communicating the information message to said one of the plurality of concurrent software processes in response to the request.

Preferably, the method further comprises communicating an information message from one of the plurality of concurrent software processes to another of the plurality of concurrent software processes. Preferably, the method further comprises managing a subscription service to which at least one of the plurality of concurrent software processes subscribes; receiving an information message for the subscription service; and sending the information message to at least one subscriber of the subscription service. Preferably, the method further comprises managing a timer and sending an information message to one of the plurality of concurrent software processes in response to the timer attaining a defined state.

Preferably the component comprises a device manager for managing a device of the receiver/decoder.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:-
Figure 1 is an overview of a satellite digital television system;
Figure 2 is an overview of a cable digital television system;
Figure 3 is an overall system view, with the head-end shown in more detail;
Figure 4 is a schematic of the component architecture of the receiver/decoder;
Figure 5 is a diagram of the software architecture of the receiver/decoder;
Figure 6 is a diagram showing the top half of Figure 5 in more detail;
Figure 7 is a diagram showing the bottom half of Figure 5 in more detail;
Figure 8 is a diagram showing an alternative embodiment of the bottom half of Figure 5;
Figure 9 is a diagram showing the software architecture of the receiver/decoder in relation to the two-processor hardware architecture;
Figure 10 is a schematic diagram showing the storage devices associated with the host processor and co-processor;
Figure 11 is a schematic diagram showing the function of the extended device layer interface (EDLI);
Figure 12 is a diagram showing the interaction between the EDLI and the device interface layer; and
Figure 13 is a diagram showing the structure of information stored and used by the EDLI.

### System overview

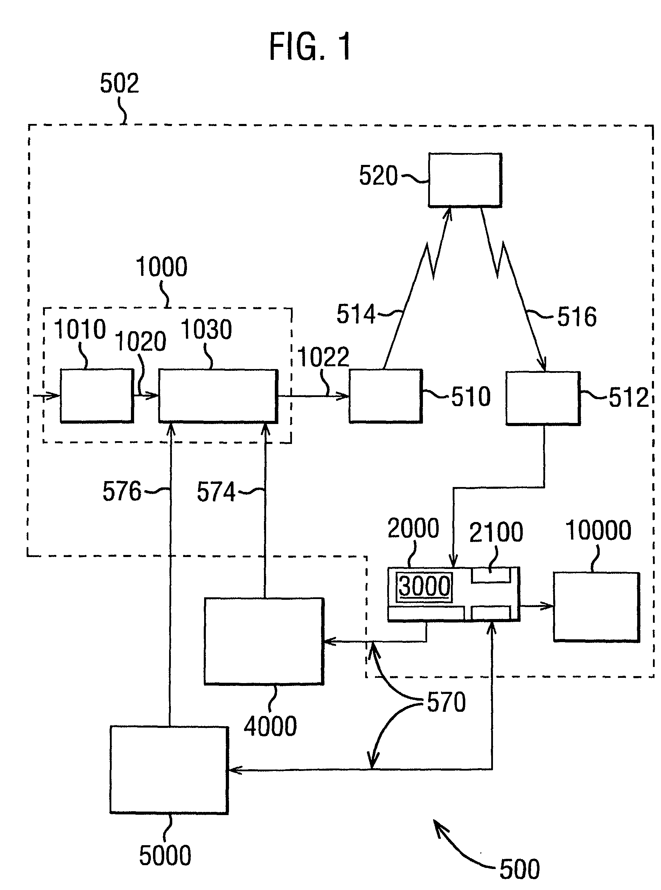

An overview of a digital television system 500 is shown in Figure 1. As will be discussed below, the system 500 comprises a broadcast centre 1000, a receiver/decoder 2000, a software/hardware architecture 3000 of the receiver/decoder, an interactive system 4000, and a conditional access system 5000, as will all be discussed below.

The system 500 includes a mostly conventional digital television system 502 that uses the known MPEG-2 compression system to transmit compressed digital signals. In more detail, MPEG-2 compressor 1010 in a broadcast centre 1000 receives a digital signal stream (typically a stream of video signals). The compressor 1010 is connected by linkage 1020 to a multiplexer and scrambler 1030.

The multiplexer 1030 receives a plurality of further input signals, assembles the transport stream and transmits compressed digital signals to a transmitter 510 of the broadcast centre via linkage 1022, which can of course take a wide variety of forms including telecommunications links. The transmitter 510 transmits electromagnetic signals via uplink 514 towards a satellite transponder 520, where they are electronically processed and broadcast via notional downlink 516 to earth receiver 512, conventionally in the form of a dish owned or rented by the end user. Other transport channels for transmission of the data are of course possible, such as terrestrial broadcast, cable transmission, combined satellite/cable links, telephone networks etc.

The signals received by receiver 512 are transmitted to an integrated receiver/decoder 2000 owned or rented by the end user and connected to the end user's television set 10000. The receiver/decoder 2000 decodes the compressed MPEG-2 signal into a television signal for the television set 10000. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In the receiver/decoder 2000 a hard disk 2100 is provided, on which audiovisual and other data can be stored. This allows advanced recording and playback facilities for programmes received by the receiver/decoder, and also allows large amounts of other types of data, such as electronic programme guide data, to be stored in the receiver/decoder.

A content management and protection system (CMPS) 2300 (not shown) in the receiver/decoder provides the ability securely and flexibly to control the recording and playback of data on the hard disk 2100 (or other storage device).

In a multichannel system, the multiplexer 1030 handles audio and video information received from a number of parallel sources and interacts with the transmitter 510 to broadcast the information along a corresponding number of channels. In addition to audiovisual information, messages or applications or any other sort of digital data may be introduced in some or all of these channels interlaced with the transmitted digital audio and video information.

An interactive system 4000 is connected to the multiplexer 1030 and the receiver/decoder 2000, and is located partly in the broadcast centre and partly in the receiver/decoder. It enables the end user to interact with various applications via a back channel 570. The back channel may be, for example a Public Switched Telephone Network (PSTN) channel (for example, a modemmed back channel) or an Out of Band (OOB) channel.
A conditional access system 5000, also connected to the multiplexer 1030 and the receiver/decoder 2000 and again located partly in the broadcast centre and partly in the receiver/decoder, enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2000. Using the receiver/decoder 2000 and smartcard, the end user may purchase commercial offers in either a subscription mode or a pay-per-view mode. Typically this is achieved using the back channel 570 which is used by the interactive system 4000.

As mentioned above, programmes transmitted by the system are scrambled at the multiplexer 1030, the conditions and encryption keys applied to a given transmission being determined by the access control system 5000. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 2000 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

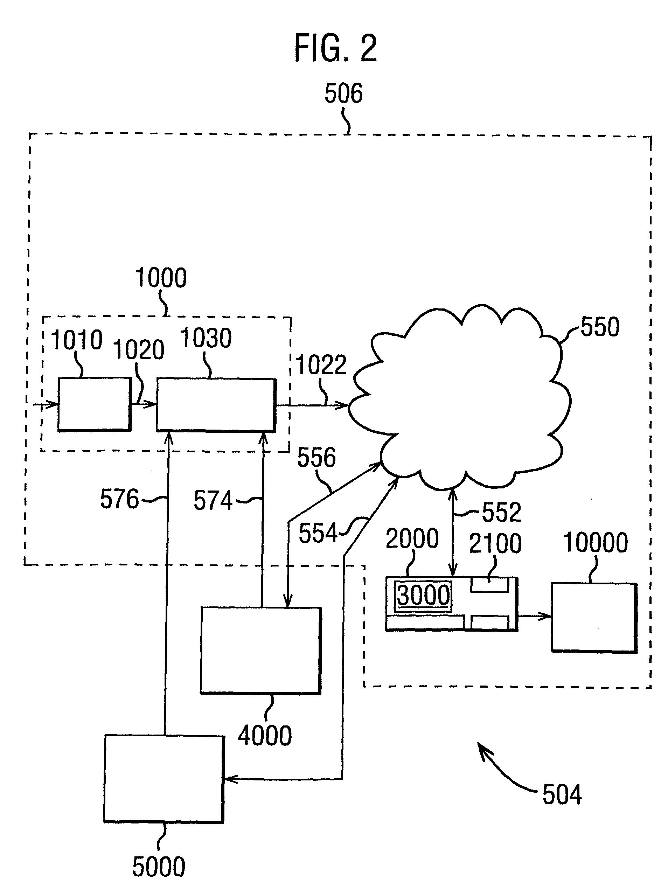

Figure 2 illustrates an alternative embodiment of a digital television system 504, utilising a cable network as the broadcast medium for the compressed digital signals. In this figure, like parts are indicated with like numerals.

The satellite transponder and transmitting and receiving stations are replaced by a cable network 550. Additionally, in this particular embodiment, the modemmed back channel between the receiver/decoder 2000 and the interactive system 4000 and conditional access system 5000 is removed, replaced by linkages 554, 556 between the cable network 550 and the conditional access system 5000 and interactive system 4000 respectively. The receiver/decoder 2000 thus communicates with the other systems via the cable network 550, utilising a cable modem or other means to allow it to send and receive data via the same link as it receives data from the broadcast centre.

The cable network 550 may be any form of wide area network (WAN), such as a dedicated connection, the internet, local cable distribution network, wireless connection, or any combination of the above. In the present embodiment, the hybrid fibre coax (HFC) network is used. It is appreciated that the various means of communication between the receiver/decoder 2000 and the other components of the television system are interchangeable.

### Conditional access system

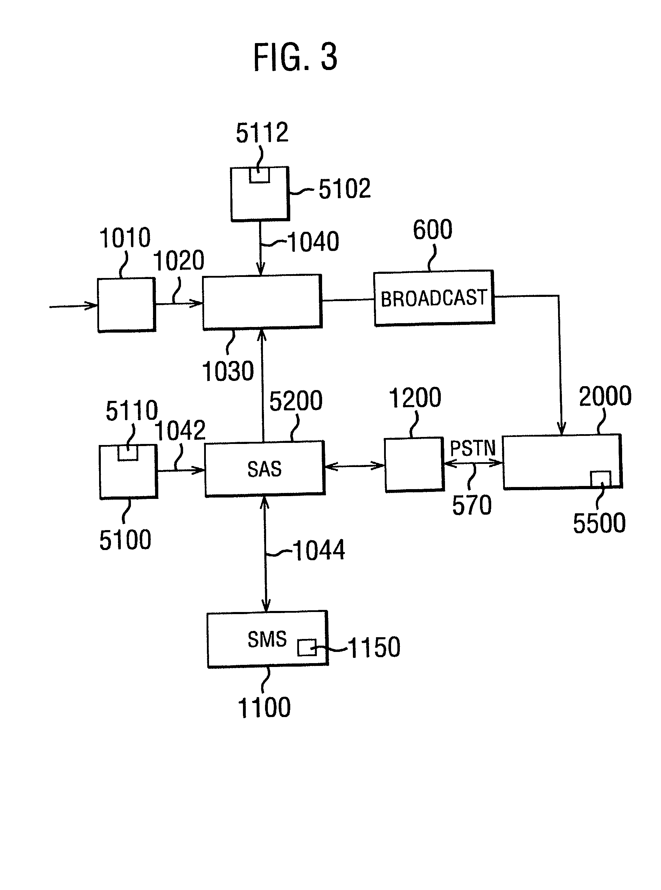

With reference to Figure 3, in overview the conditional access system 5000 includes a Subscriber Authorization System (SAS) 5200. The SAS 5200 is connected to one or more Subscriber Management Systems (SMS) 1100, one SMS for each broadcast supplier, by a link 1044, which may be a TCP-IP link or other type of link. Alternatively, one SMS could be shared between two commercial operators, or one operator could use two SMSs, and so on.

First encrypting units in the form of ciphering units 5100 utilising "mother" smartcards 5110 are connected to the SAS by linkage 1042. Second encrypting units again in the form of ciphering units 5102 utilising mother smartcards 5112 are connected to the multiplexer 1030 by linkage 1040. The receiver/decoder 2000 receives a "daughter" smartcard 5500. The receiver/decoder is connected directly to the SAS 5200 via communications servers 1200 and the modemmed back channel 570. The SAS sends amongst other things subscription rights to the daughter smartcard on request.

In variants of the preferred embodiment, internet or cable connections either complement or replace the PSTN 570 and communications servers 1200.
The smartcards contain confidential information from one or more commercial operators. The "mother" smartcard encrypts different kinds of messages and the "daughter" smartcards decrypt the messages, if they have the rights to do so.

With reference to Figure 3, in the broadcast centre, the digital video signal is first compressed (or bit rate reduced), using the MPEG-2 compressor 1010. This compressed signal is then transmitted to the multiplexer and scrambler 1030 in order to be multiplexed with other data, such as other compressed data.

The scrambler generates a control word used in the scrambling process and included in the MPEG-2 stream in the multiplexer 1030. The control word is generated internally and enables the end user's integrated receiver/decoder 2000 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 5102 via the linkage 1040. In this unit, an ECM is generated, encrypted and transmitted on to the multiplexer and scrambler 1030.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 1030 receives electrical signals comprising encrypted EMMs from the SAS 5200, encrypted ECMs from the second encrypting unit 5102 and compressed programmes from the compressor 1010. The multiplexer 1030 scrambles the programmes and transmits the scrambled programmes, the encrypted EMMs and the encrypted ECMs as electric signals to broadcast system 600, which may be for example a satellite system as shown in Figure 1, or other broadcast system. The receiver/decoder 2000 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 2000 extracts the corresponding ECM from the MPEG-2 stream and passes the ECM to the "daughter" smartcard 5500 of the end user. This slots into a housing in the receiver/decoder 2000. The daughter smartcard 5500 controls whether the end user has the right to decrypt the ECM and to access the programme. If not, a negative status is passed to the receiver/decoder 2000 to indicate that the programme cannot be descrambled. If the end user does have the rights, the ECM is decrypted and the control word extracted. The decoder 2000 can then descramble the programme using this control word. The MPEG-2 stream is decompressed and translated into a video signal for onward transmission to television set 10000.

If the programme is not scrambled, no ECM will have been transmitted with the MPEG-2 stream and the receiver/decoder 2000 decompresses the data and transforms the signal into a video signal for transmission to television set 10000.

The subscriber management system (SMS) 1100 includes a database 1150 which manages, amongst others, all of the end user files, commercial offers (such as tariffs and promotions), subscriptions, PPV details, and data regarding end user consumption and authorization. The SMS may be physically remote from the SAS.

The SMS 1100 transmits messages to the SAS 5200 which imply modifications to or creations of Entitlement Management Messages (EMMs) to be transmitted to end users. The SMS 1100 also transmits messages to the SAS 5200 which imply no modifications or creations of EMMs but imply only a change in an end user's state (relating to the authorization granted to the end user when ordering products or to the amount that the end user will be charged). The SAS 5200 also sends messages (typically requesting information such as call-back information or billing information) to the SMS 1100, so that it will be apparent that communication between the two is two-way.

### Receiver/decoder

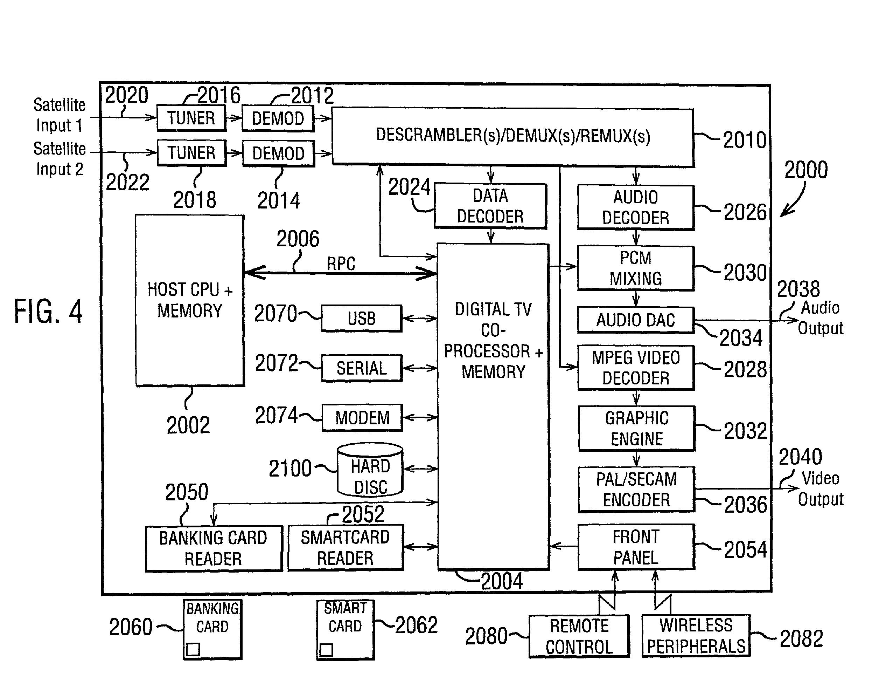

Referring to Figure 4, the various elements of receiver/decoder 2000 will now be described in terms of functional blocks.

The receiver/decoder 2000, which may be, for example, a digital set-top box (DSTB), comprises a central host processor 2002 and a digital TV coprocessor 2004, both having associated memory elements (not shown) and joined by a coprocessor bus 2006. The coprocessor 2004 is adapted to receive input data from a USB interface 2070, a serial interface 2072, a parallel interface (not shown), a modem 2074 (connected to the modem back channel 570 of Fig. 1), and switch contacts on the front panel 2054 of the decoder.

The receiver/decoder is additionally adapted to receive inputs from an infra-red remote control 2080 (and optionally from other wireless peripherals 2082 such as Bluetoothenabled devices) and also possesses two smartcard readers 2050, 2052 adapted to read bank and subscription smartcards 2060, 2062 respectively. The subscription smartcard reader 2052 engages with an inserted subscription card 2062 and with a conditional access unit (not shown) to supply the necessary control word to a demultiplexer/descrambler/remultiplexer unit 2010 to enable the encrypted broadcast signal to be descrambled. The decoder also includes a conventional tuner 2016 and demodulator 2012 to receive and demodulate the satellite transmission before being filtered and demultiplexed by the demodulator/descrambler unit 2010. A second tuner 2018 and second demodulator 2014 are also provided, to allow, amongst other things, a second channel to be received and decoded in parallel with the first.

A hard disk 2100 is also provided, allowing storage of programme and application data received and generated by the receiver/decoder. In conjunction with the two tuners 2016, 2018, two demodulators 2012, 2014, the descrambler/demultiplexer/remultiplexer 2010, and the data decoder 2024 and audio decoder 2026, advanced recording and playback features are provided, allowing simultaneous recordings of one or more programmes while a further programme is being viewed, and more general transfers to and from the hard disk to and from the display devices and/or inputs and outputs, all occurring in parallel.

The audio output 2038 and video output 2040 in the receiver/decoder are fed by the PCM mixer 2030 and audio DAC 2034, and the MPEG video decoder 2028, graphic engine 2032 and PAL/SECAM encoder 2036 respectively. Alternative or complementary outputs may of course be provided.

As used in this description, an application is preferably a piece of computer code for controlling high level functions of preferably the receiver/decoder 2000. For example, when the end user positions the focus of remote control 2080 on a button object seen on the screen of the television set (not shown) and presses a validation key, the instruction sequence associated with the button is run. Applications and the associated middleware are executed by the host processor 2002, with remote procedure calls (RPCs) being made to the digital TV coprocessor 2004 across the coprocessor bus 2006 as and when required.

An interactive application proposes menus and executes commands at the request of the end user and provides data related to the purpose of the application. Applications may be either resident applications, that is, stored in the ROM (or FLASH or other non-volatile memory) of the receiver/decoder 2000, or broadcast and downloaded into the RAM, FLASH memory or hard disk of the receiver/decoder 2000.

Applications are stored in memory locations in the receiver/decoder 2000 and represented as resource files. The resource files comprise graphic object description unit files, variables block unit files, instruction sequence files, application files and data files.

The receiver/decoder contains memory (not shown) divided into at least one RAM volume, a FLASH volume and at least one ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

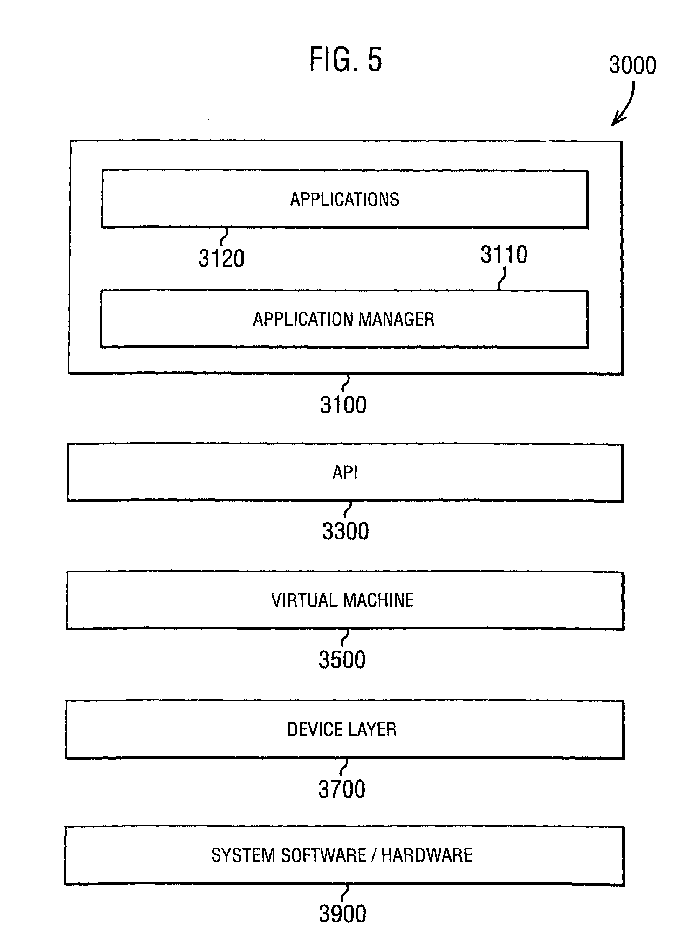

With reference to Figure 5, the software/hardware architecture 3000 of the receiver/decoder contains five software layers, organized so that the software can be implemented in any receiver/decoder and with any operating system. The various software layers are application layer 3100, application programming interface (API) layer 3300, virtual machine layer 3500, device interface layer 3700 (often abbreviated just to 'device layer') and system software/hardware layer 3900.

The application layer 3100 encompasses applications 3120 that are either resident in or downloaded to the receiver/decoder. They may be interactive applications used by customers, written in, for example, Java, HTML, MHEG-5 or other languages, or they may be applications used by the receiver/decoder for other purposes, for example for running such interactive applications. This layer is based on a set of open Application Programming Interfaces (APIs) provided by the Virtual Machine layer. This system allows applications to be downloaded to the hard disk, flash memory or RAM memory in the receiver/decoder on-the-fly or on demand. The application code can be transmitted in compressed or uncompressed format using protocols such as Data Storage Media Command and Control (DSMCC), Network File Server (NFS) or other protocols.

The API layer 3300 provides high-level utilities for interactive application development. It includes several packages that make up this high-level API. The packages provide all the functionality necessary to run interactive applications. The packages are accessible by the applications.

In a preferred embodiment the API is adapted for applications written in the Java, PanTalk or such similar programming languages. Furthermore, it can facilitate the interpretation of HTML and other formats, such as MHEG-5. Besides these features, it also includes other packages and service modules that are detachable and extensible as requirements dictate.

The virtual machine layer 3500 is composed of language interpreters and various modules and systems. This layer, managed by a kernel 3650 (not shown), consists of everything necessary to receive and execute interactive applications in the receiver/decoder.

The device interface layer 3700 includes a Device Manager and software devices (generally referred to herein as just 'devices'). Devices are software modules which consist of the logical resources necessary for management of external events and physical interfaces. The device interface layer, under the control of the Device Manager, manages communication channels between drivers and applications and provides enhanced error exception checking. Some examples of managed (hardware) devices are: card readers 3722 (not shown), modems 3730 (not shown), network 3732 (not shown), PCMCIA (Personal Computer Memory Card International Association), LED display and so on. Programmers do not have to deal with this layer directly, since the API layer controls the devices from above.

The system software/hardware layer 3900 is provided by the manufacturer of the receiver/decoder. Because of the modularity of the system and because services supplied by the higher-level operating system (such as event scheduling and memory management) are part of the virtual machine and kernel, the higher layers are not tied to a particular real-time operating system (RTOS) or to a particular processor.

Typically the virtual machine layer 3500, occasionally in combination with the device interface layer 3700 and/or API 3300, is referred to as the 'middleware' of the receiver/decoder.

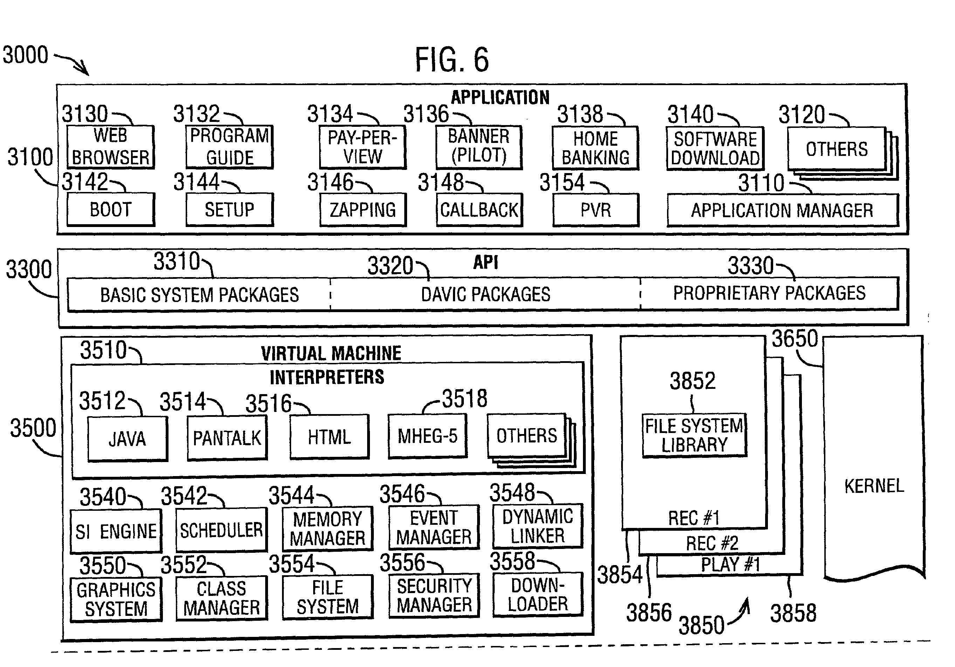

With reference to Figure 6 the software architecture of the receiver/decoder 3000 corresponding to the top half of Figure 5 (comprising the application layer 3100, API layer 3300 and virtual machine layer 3500) will now be described in more detail.

Interactive applications are applications that the user interacts with, for example, to obtain products and services, such as electronic program guides, telebanking applications and games.

There are two types of application in the application layer 3100, plus the Application Manager 3110. There are interactive applications such as a Web Browser 3130 which can be added at any time as long as they conform to the API 3300, and there are resident applications which manage and support the interactive applications. The resident applications are substantially permanent and include the following:
- Boot. The Boot application 3142 is the first application launched when the receiver/decoder is powered on. The Boot application first starts the Application Manager 3110, and then starts the "Manager" software modules in the virtual machine 3500, such as the Memory Manager 3544 and the Event Manager 3546.
- Application Manager. The Application Manager 3110 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 3144 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 3146 is used to change channels using the Program-up, Program-down and numeric keys. When another form of zapping is used, for example, through a banner (pilot) application, the Zapping application is stopped.
- Callback. The Callback application 3148 is used to extract the values of various parameters stored in the receiver/decoder memory and return these values to the commercial operator via modemmed back channel 1070 (not shown), or by other means.

Other applications in the application layer 3100 include a program guide application 3132, a pay-per-view application 3134, a banner (pilot) application 3136, a home banking application 3138, a software download application 3140 and a PVR (personal video recorder) application 3154 (see below).

As noted above, the Application Programming Interface (API) layer 3300 contains several packages. These include basic system packages 3310, used, for example, to access basic features of the virtual machine, DAVIC packages 3320, and proprietary packages 3330, used to access features of the software architecture unique to the principal software vendor.

Considered in more detail, the virtual machine 3500 includes the following:
- Language Interpreters 3510. Different interpreters can be installed to conform to the type of applications to be read. These include Java interpreters 3512, PanTalk interpreters 3514, HTML interpreters 3516, MHEG-5 interpreters 3518 and others.
- Service Information (SI) Engine. The SI Engine 3540 loads and monitors common Digital Video Broadcasting (DVB) or Program System Information Protocol (PSIP) tables and puts them into a cache. It allows access to these tables by applications which need the data contained in them.
- Scheduler 3542. This module allows for pre-emptive, multithreaded scheduling with each thread having its own event queue.
- Memory Manager 3544. This module manages the access to memory. It also automatically compresses data in memory when necessary and performs automatic garbage collection.
- Event Manager 3546. This module allows events to be triggered according to priority. It manages timer and event grabbing and allows applications to send events to each other.
- Dynamic Linker 3548. This module allows the resolution of addresses arising from native Java functions, loads native methods from a Java class downloaded into RAM and resolves calls from downloaded native codes towards ROM.
- Graphics System 3550. This system is object-orientated and optimized. It includes graphic window and object management as well as a vectorial font engine with multi-language support.
- Class Manager 3552. This module loads classes and resolves any class referencing problems.
- File System 3554. This module is compact and optimized to manage a hierarchical file system with multiple ROM, flash, RAM and DSMCC volumes. Flash integrity is guaranteed against any incidents.
- Security Manager 3556. This module authenticates applications and controls the access of applications to sensitive memory and other zones of the set-top box.
- Downloader 3558. This module uses automatic data loading from a remote DSMCC carousel or through the NFS protocol, with downloaded files accessed in the same way as resident ones. Memory clear-up, compression and authentication are also provided.

Furthermore, the DAVIC resource notification model is supported so that client resources are efficiently managed.

A kernel 3650 manages the various different processes running in the virtual machine 3500 and device interface layer 3700 (not shown). For efficiency and reliability reasons, the kernel implements relevant parts of the POSIX standard for operating systems.

Under control of the kernel, the virtual machine (running Java and Pantalk applications) runs in its own thread, separate to other 'server' elements of the operating system, such as the mass storage server 3850 (not shown). Corresponding provisions, such as requiring Thread IDs to be passed as parameters in system calls, are also made in the API layer 3300 to allow the applications 3120 to benefit from the multithreaded environment.

By providing multiple threads, more stability can be achieved. For example, if the virtual machine 3500 ceases to operate for some reason, by suffering a crash or being blocked for a long time by an application trying to access a device, other time-critical parts of the system, such as the hard disk server, can continue to operate.

As well as the virtual machine 3500 and kernel 3650, a hard disk video recorder (HDVR) module 3850 is provided for handling the recording and playback functions of the hard disk 2210 or other attached mass storage component. The server comprises two separate threads 3854, 3856 handling recording, one thread 3858 for handling playback, and a file system library 3852 for interfacing with the mass storage components.

An appropriate one of the threads 3854, 3856, 3858 in the hard disk video recorder (HDVR) 3850 receives commands (such as a command to start recording a particular programme) from clients such as the personal video recorder (PVR) application 3154, in response to the user pressing a 'record' button, for example.

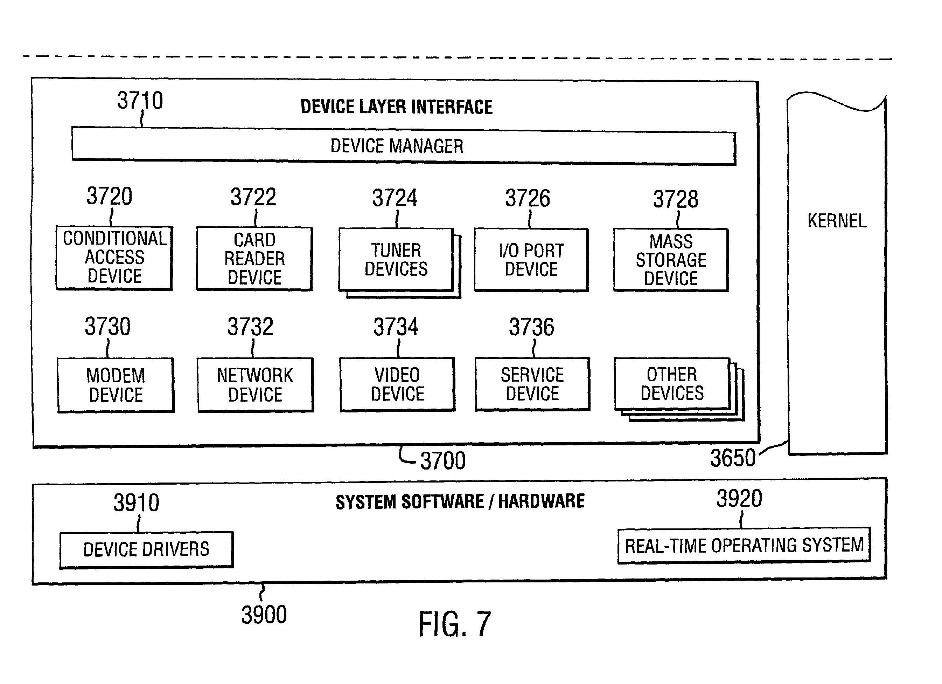

In turn, the thread in question then interacts with the service device 3736 (shown in Figure 7) to set up and synchronise the parts of the receiver/decoder handling the bitstream to be recorded or played back. In parallel, the thread also interacts with the file system library 3852 to coordinate the recording or playback operation at appropriate places on the hard disk 2210 (not shown).

The file system library 3852 then sends commands to the mass storage device 3728 (also shown in Figure 7) which tell the mass storage device 3728 which sub-transport stream (STS) to transfer (via a FIFO buffer), and on which hard disk target the stream should be stored. Allocation of clusters on the hard disk and general file management is carried out by the file system library 3852, the mass storage device itself being concerned with lower level operations.

The service device 3736 mentioned above is unique amongst the devices in that it does not relate to a physical component of the receiver/decoder. It instead provides a high level interface which groups together in a single 'instance' the various sets of tuner, demultiplexer, remultiplexer and hard disk devices in the receiver/decoder, freeing higher level processes from the difficulties of coordinating the various sub-devices.

With reference to Figure 7 the software architecture of the receiver/decoder 3000 corresponding to the bottom half of Figure 5 (comprising the device interface layer 3700 and the system software and hardware layer 3900) will now be described in more detail.

Further devices provided in the device layer include the conditional access device 3720, tuner devices 3724 corresponding to the two (or potentially more) tuners 2016, 2018 of Figure 4, the video device 3734, the I/O port device 3726, and the service device 3736 and mass storage device 3728 mentioned above.

In broad terms, a device can be regarded as defining a logical interface, so that two different devices may be coupled to a common physical port. Certain devices may communicate among themselves, and all devices also operate under the control of the kernel 3650.

Before using the services of any device, a program (such as an application instruction sequence) has to be declared as a "client", that is, a logical access-way to the device or the device manager 3710. The manager gives the client a client number which is referred to in all accesses to the device. A device can have several clients, the number of clients for each device being specified depending on the type of device. A client is introduced to the device by a procedure "Device: Open Channel". This procedure assigns a client number to the client. A client can be taken out of the device manager 3710 client list by a procedure "Device: Close Channel".

The access to devices provided by the device manager 3710 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

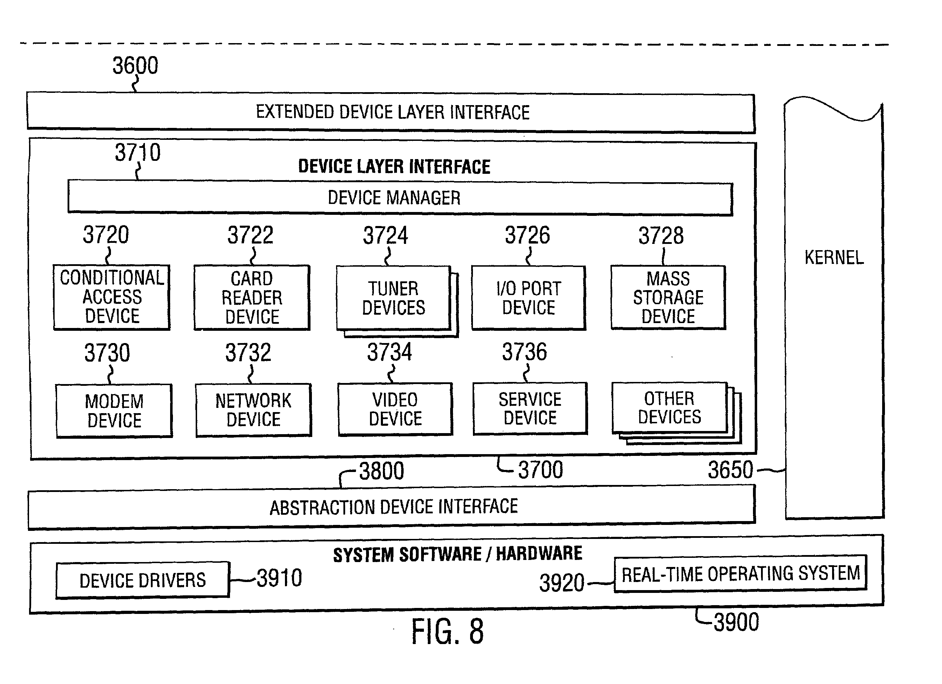

In a second embodiment of the receiver/decoder, the lower half of the architecture of the receiver/decoder is replaced by the layers shown in Figure 8.

In this embodiment, an extended device layer interface (EDLI) 3600 is provided between the virtual machine 3500 (not shown) and the device interface layer 3700, and an abstraction device interface 3800 is provided between the device interface layer 3700 and the system software/hardware layer 3900. Otherwise, like parts are indicated with like reference numerals.

The extended device layer interface (EDLI) 3600 provides a dedicated interface between the virtual machine 3500 and the device interface layer 3700 and generally provides multithreading support to the device interface layer. Functions of the EDLI include routing asynchronous events to the appropriate thread in the middleware (since the device interface layer need not itself support multithreading) and routing messages between threads.

The abstraction device interface 3800 provides a further interface between the device interface layer 3700 and the device drivers 3910 in the system software/hardware layer 3900. By providing such an interface, the large and complex device layer 3700 can be made hardware independent to a greater degree.

### Overview of the dual processor architecture, the multitasking environment and the Extended Device Layer Interface

POSIX, as referred to herein, is a real-time operating system standard based on Unix. The POSIX standard referred to herein is that described in the IEEE/ANSI 1003.1 (1996) standard as well as related standards and draft standards. However, although embodiments are described which use an operating system compatible with a subset of the POSIX standards, other suitable operating systems may also be used.

As shown in Figure 4, two processors are present in the receiver/decoder. These are host CPU 2002 and digital TV co-processor 2004. It is noted in passing that Figures 6, 7 and 8 show the software architecture independently from the hardware platform, and therefore show a single operating system kernel 3650. This software architecture may be implemented on different hardware platforms, for example on single processor or dual processor platforms. Where more than one processor is present, different components of the software architecture are executed on different processors, and each processor is controlled by a separate operating system. Those separate operating systems then in combination perform the functions of kernel 3650.

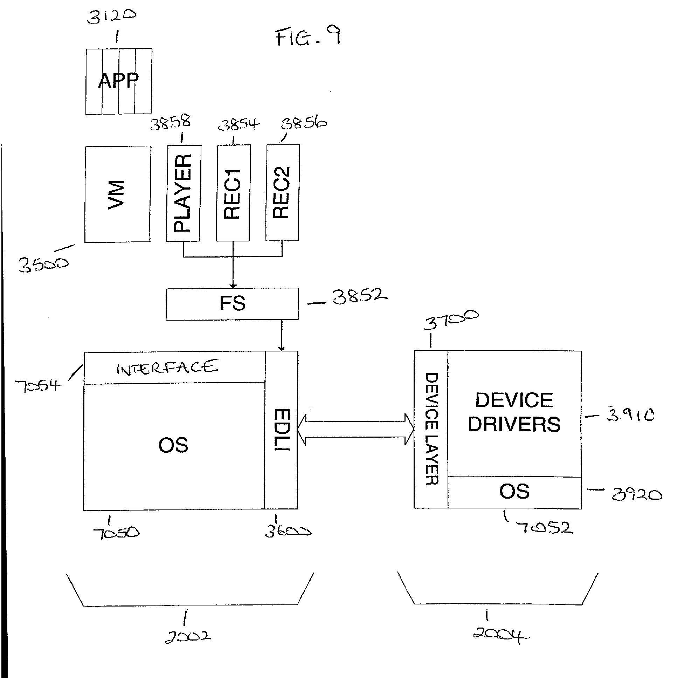

Figure 9 gives a view of the software architecture as used in the two-processor embodiment, separating the software executed on each of the two processors. In this embodiment, the functions of kernel 3650 are performed by separate operating systems (or operating system kernels) 7050 and 7052.

The host CPU 2002 operates under the control of multitasking real-time operating system 7050. In a preferred embodiment the real-time operating system implements a subset of the POSIX operating system standard by at least providing an interface 7054 compatible with the POSIX subset. This allows for greater portability of receiver/decoder software across different hardware platforms. The virtual machine thread 3500 runs the end-user applications 3120. The playback thread 3858 and the recording threads 3854 and 3856 control the recording and playback of programmes to and from the mass storage device using the file system library 3852. An extended device layer interface (EDLI) provides an interface to the digital TV coprocessor 2004.

The digital TV coprocessor 2004 operates under the control of separate operating system 7052 and provides access to the device drivers 3910 through the device interface layer 3700, which will be referred to henceforth as the 'device layer'.

The EDLI 3600 provides an extension of the device layer 3700. It enables calls to be made from the multitasking environment on host CPU 2002 to the device layer on coprocessor 2004, which, as will be explained later, may or may not operate in a multitasking environment. To achieve this, the EDLI performs such calls under mutual exclusion, that is, only one device call may be active at any one time. The EDLI also associates a thread identifier with a device call, and ensures that events triggered by the device layer are passed to the correct thread in the multitasking environment of the host processor 2002.

For example, one of the recording and playback threads 3854, 3856 and 3858 may control the storage or retrieval of an MPEG stream on or from the mass storage device by a call to the file system library 3852, which in turn calls the EDLI 3600. The EDLI then attempts to lock a mutex (mutual exclusion object) guarding access to the device layer 3700. If successful, the call has the thread identifier of the calling thread associated with it and is forwarded as a remote procedure call to the device layer under mutual exclusion. Events are signalled from the device layer via the EDLI, which ensures that the correct thread receives the event. The EDLI will be discussed in more detail later.

### Dual Processor Architecture

Generally speaking, the dual processor architecture divides the functions of the receiver/decoder into two main areas. The digital TV coprocessor 2004 performs those functions concerned with the low-level operation of the receiver/decoder, for example with the reception and storage on the mass storage device of MPEG streams or other information. The host processor 2002 carries out the receiver/decoder's end-user applications as well as any functions needed to support those applications. Specifically, with reference to the architecture model of Figures 6 and 7, the functions carried out by the host processor 2002 are those of the application layer 3100, the API layer 3300, the virtual machine 3500 and the hard disk video recorder (HDVR) module 3850, whilst functions of device layer 3700 and device drivers 3910 are performed by the digital TV co-processor 2004.

In some preferred embodiments this separation is not completely rigid. For example, in such embodiments some high-level devices are executed on the host processor rather than the TV coprocessor, in particular abstract devices not having a direct correlation to any physical device. In further embodiments, the device layer forms part of the host processor environment as a whole.

Applications control the operation of the receiver/decoder by interacting with the device layer executing on the coprocessor, either with software devices or with the device manager. This interaction is enabled by the EDLI 3600 on the host processor. For example, an application may instruct the device layer to tune to a particular channel or record a particular information stream on the mass storage device. To achieve this, the application calls a device function in the EDLI. The EDLI then calls a corresponding device layer function by making a remote procedure call via the coprocessor bus to the coprocessor.

The device layer (executing on the coprocessor) then performs the operations necessary to carry out the request, for example by selecting the correct channel or controlling the flow of information streams within the receiver/decoder. The host processor therefore does not deal with information streams - or any of the low-level functions of the receiver/decoder - directly at all. Instead, the host processor's full capacity is available for supporting and executing applications. This also means that the capacity available to applications on the host processor remains constant, regardless of the amount of activity occurring at the co-processor.

The device layer in the coprocessor communicates with the host processor using an event model. An event triggered by the device layer is processed by the EDLI, which ensures that the event is passed to the appropriate thread in the host processor. For example, a software device may trigger an event to report the status or completion of a device operation. The EDLI will be described in more detail below.

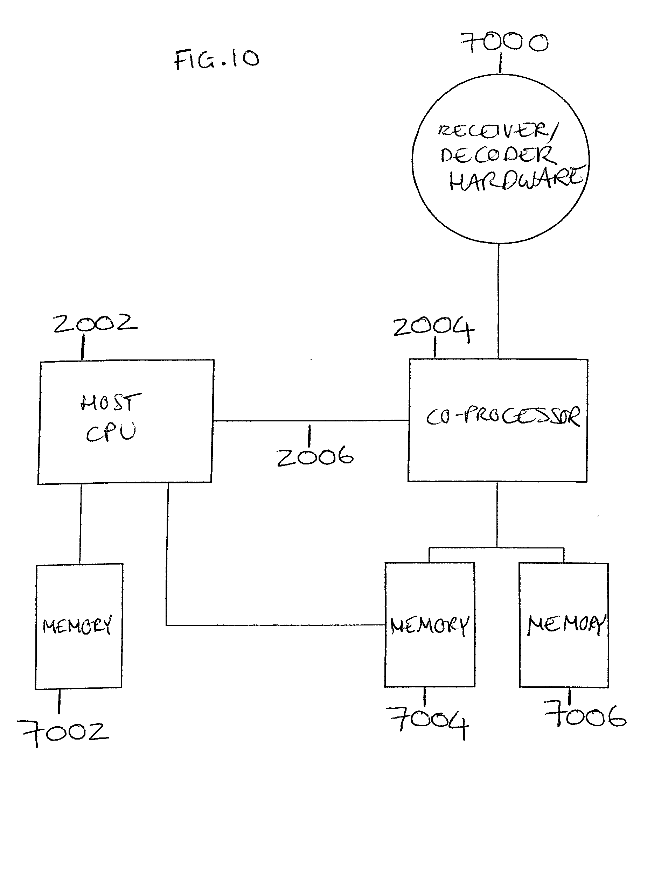

A detailed view of the receiver/decoder hardware architecture of Figure 4, illustrating the dual processor architecture, is provided in Figure 10. Host processor 2002 is connected to digital TV coprocessor 2004 via coprocessor bus 2006, enabling communication via remote procedure calls and events between the two processors. Host processor 2002 is also connected to memory 7002 and separate memory 7004. Digital TV coprocessor 2004 is connected to memory 7004 and to other receiver/decoder hardware shown in summary as 7000. Coprocessor 2004 is also connected to.its own (non-shared) memory 7006.

Memory 7004 is thus shared between processors 2002 and 2004, whilst each processor is also connected to a non-shared memory, namely memories 7002 and 7006. In some embodiments, memories 7002, 7004 and 7006 are provided by physically separate memory modules. In a preferred embodiment, memories 7004 and 7006 are provided by the same physical memory module and are logically separated into shared and non-shared memories. In this embodiment, the host processor may access the co-processor memory but not vice versa. In other embodiments the co-processor may also access the host-processor memory.

Other memory architectures employing different physical and logical arrangements are also possible. These different architectures may be implemented in several ways. For example, in some embodiments the host processor memory 7002 and the coprocessor memory comprising 7004 and 7006 are connected to the same memory bus. The shared memory is then accessible as a window within the host processor memory address space.

The sharing of the co-processor memory has certain memory management implications in the case where the co-processor uses a cache memory. In this case it may need to be ensured that both processors see the same memory content in the shared memory. This is achieved by updating shared memory and cache before and after access to the shared memory by the host processor has taken place.

The provision of shared memory allows larger amounts of data to be exchanged between the two processors than would be practical using the event model communication via the co-processor bus. Examples of such information are downloaded program code extracted from a received stream or a still image for use in an end-user application.

### Multitasking environment

As previously stated, a multitasking real-time operating system 7050 is used on the host processor. Though other operating systems can be used, a real-time operating system is preferred as certain functions such as the recording and playback of information on and from the mass storage device may be time-critical. Using a multi-tasking operating system reduces the complexity involved in simultaneously recording and playing back information and executing end-user applications. In a preferred embodiment, the operating system conforms to at least a subset of the POSIX standard. POSIX provides multitasking abilities at two levels: processes and threads. While the following describes an environment of multiple threads running within a single process, other implementations are possible; for example, multiple concurrent processes may be used instead of or as well as multiple concurrent threads.

Referring once again to Figure 9, threads executed on the host processor typically include the virtual machine 3500, the playback thread 3858 and the recording threads 3854 and 3856.

The virtual machine 3500 executes the applications 3120. In a preferred embodiment, the virtual machine includes its own multitasking mechanism for executing more than one application concurrently. This mechanism is separate from the multitasking environment provided by the operating system 7050, in which the virtual machine is itself only a single thread. In other embodiments, the virtual machine executes applications as full operating system threads.

The control of playback and recording of programmes using the mass storage device is performed by the separate threads 3854, 3856 and 3858. Since the recording of live broadcast streams and the playback of streams are time-critical operations, this arrangement provides greater reliability and prevents loss of information in recording and playback. If, for, example, the virtual machine thread or another thread ceases operation because it is waiting for a resource or due to a programme error, the recording and/or playback threads continue to operate.

Since in the present embodiment two tuners are provided in the receiver/decoder, at least two programmes may be recorded simultaneously whilst a third is played back from the mass storage device; hence two recording and one playback threads are shown. In some embodiments more recording and playback threads are possible.

The recording and playback threads communicate with the device layer through the EDLI. The EDLI ensures that such communication is performed under mutual exclusion and that events triggered by the device layer are passed to the correct thread. This will be described in more detail below.

### Extended Device Layer Interface

The Extended Device Layer Interface (EDLI) 3600 (as shown in Figures 8, 9 and 11) is an extension layer for the device layer. Functions offered by the EDLI could be used on set top box platforms other than those described herein.

The embodiments described herein assume the existence of a device layer having particular features and characteristics, though other embodiments are possible which rely on device layers having different features and characteristics. In particular, a device layer and interface based on that described in WO 98/43172 (which document is incorporated herein by reference) is used as a basis for the embodiments given here. The EDLI is designed to be compatible with the given device layer implementation and is designed to extend its functionality without requiring any changes to the device layer itself.

The EDLI enables communication between the multi-threaded application environment on the host processor and the device layer on the TV coprocessor. In a preferred embodiment, the EDLI comprises a library of functions as well as an event manager comprising an event receiving thread. This thread receives events from the device layer running on the co-processor, which it stores in host processor memory for later retrieval by the EDLI functions. The event receiving thread is dormant until activated by a signal from the device layer signalling an event.

In order to be able to operate safely in a multi-threaded environment, the EDLI 3600 is itself thread-safe. The EDLI is also designed to be independent of the implementation of the device layer. Therefore, no assumption is made about whether the device layer is itself thread-safe. Consequently, all functions of the EDLI 3600 which offer access to device layer functions lock a global mutex and do not unlock the mutex until the device call is terminated.

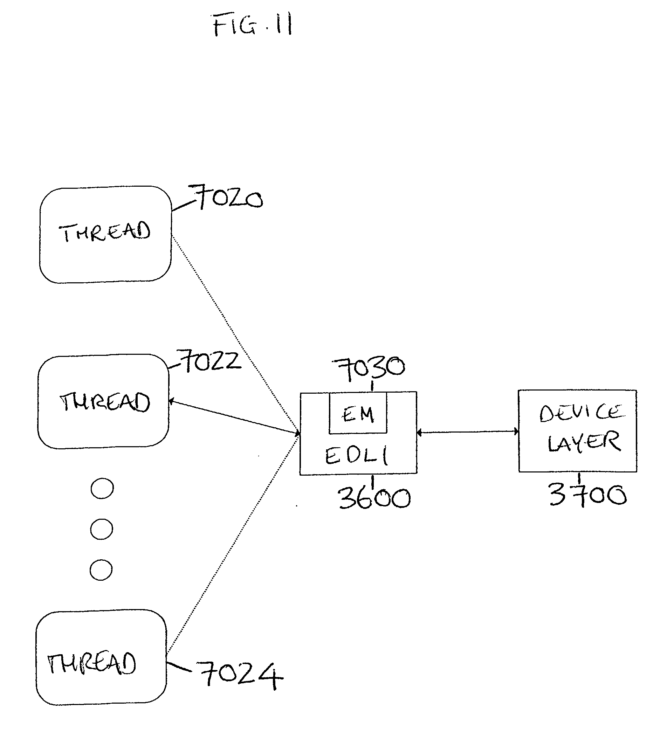

The EDLI will now be described with reference to Figure 11.

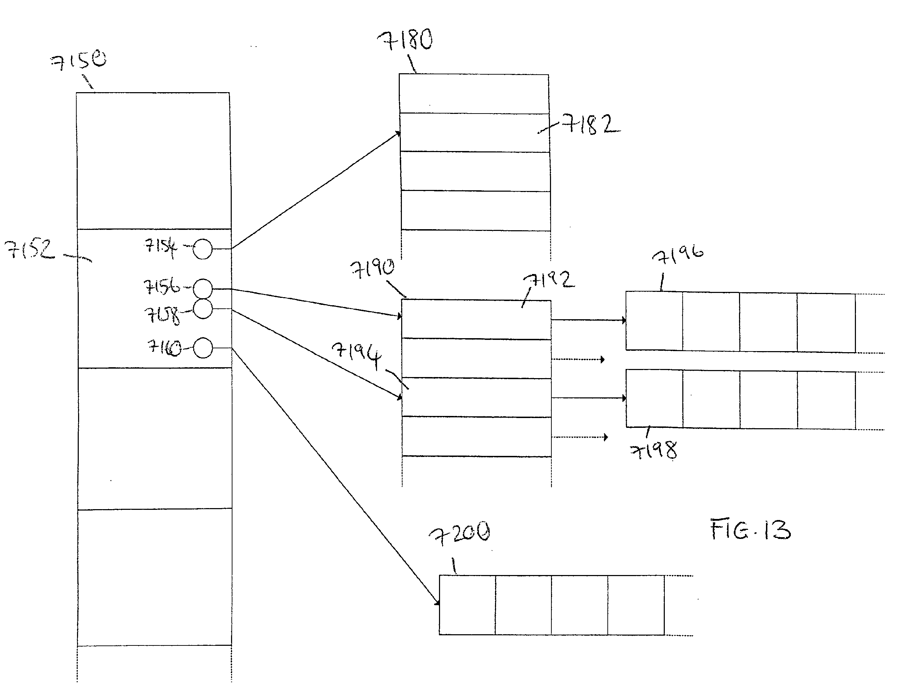

Threads 7020 to 7024 communicate with the device layer 3700 through the EDLI 3600 comprising event manager 7030. The EDLI stores and maintains certain information, as shown separately in Figure 13 and discussed later. The EDLI allows only one call to be made to the device layer at a time. To this end, access to the device layer 3700 is guarded by a mutual exclusion object (mutex). Upon receiving a device call from a thread, the EDLI attempts to lock the mutex. If this is not possible (usually because it has already been locked by another thread), the calling thread must wait until the mutex becomes unlocked. Once the mutex has been unlocked by the other thread, the EDLI locks the mutex and makes a call to the device layer. Once the call has been completed, the EDLI unlocks the mutex.

The EDLI also records which thread is associated with a particular device call. When the device layer triggers an event, the EDLI uses this information to pass the event to the appropriate thread. Specifically, the event is received by event manager 7030 and stored in the host processor memory. When a call is made to the EDLI to retrieve an event, the EDLI identifies the correct event using the information previously stored.

This interaction will now be described in more detail. The detailed examples given are based on a device layer interface as defined in WO 98/43172 (page 17 line 19 to page 25 line 11).

As previously stated, the purpose of the EDLI 3600 is to offer an extension layer to the device layer so that functions of the device layer are accessible to the middleware using a fixed interface regardless of the implementation of the device layer. Changes to the device layer will therefore not affect middleware programs; nor will the use of different implementations of the device layer on different hardware platforms. The EDLI thus improves portability of the higher-level elements of the receiver/decoder software.

On the other hand, certain embodiments of the EDLI may include supplementary interfaces for additional services which are not (or not wholly) part of the device layer, though they may use functions of the device layer; for example, abstract devices with no direct correlation to hardware devices. In some embodiments, the EDLI therefore provides a unified interface to hardware devices and device-related software services regardless of how and where they are implemented. This is of significance in the dual processor embodiment as described above, where services may be performed within the host processor environment or as devices in the device layer of the co-processor environment.

Thus, in summary, the EDLI provides:
i) encapsulation of and compatibility with the (existing) device layer
ii) extension of the device layer
iii) mutually exclusive access to the device layer
iv) event management (ensuring that events received from the device layer are routed to the correct clients and the correct threads)

Some preferred embodiments provide features in addition to those of i) to iv) above. Some examples of additional features will be described later.

### The existing device layer

As has been previously stated, preferred embodiments of the EDLI 3600 assume the existence of a device layer 3700 which is encapsulated by the EDLI. The EDLI provides independence from the device layer. Software using the EDLI need not be aware of details of the implementation of the device layer; and there is no need to modify such software to operate successfully in environments using different device layer implementations.

The EDLI itself assumes that the interface to the device layer corresponds to a given specification, though different EDLI implementations may be provided for different device layer implementations. Embodiments of the EDLI are described herein with reference to a specific device layer embodiment. This, however, serves as an example only, and different device layer embodiments may be used. The exemplary device layer embodiment will be referred to henceforth as the 'existing device layer' or simply the 'device layer'.

The (existing) device layer provides functions relating to memory management, FIFO buffer management and device interaction. For the purposes of describing the EDLI, only the device interaction functions of the device layer are discussed here.

Device interactions occur between a client and a device, and typically comprise at least the following steps:
- Opening a channel - Channels may be opened between a client and the device manager or between a client and a device directly. A client identifier (client_ID) is generated and registered with the device or with the device manager. This client identifier together with a device identifier define the channel. Each device, as well as the device manager, maintains a client list in which registered clients are recorded.
- Making a device request - The client requests a device operation by either a synchronous call (control returns to the client once the requested operation has been completed) or an asynchronous call (control returns to the client once the requested operation has been initiated; completion of the operation is later signalled to the client through an event).
- Receiving an event - The device layer may trigger events to communicate the status or completion of a device operation to the client, or to signal unexpected events such as the insertion or removal of a smartcard.
- Closing a channel - The client is removed from the relevant device's or the device manager's client list, thus closing the channel.

Some relevant device management functions of the device layer are described in Table 1 below. A more detailed description of some of these functions is given in WO 98/43172 (page 17 line 19 to page 25 line 11; incorporated herein by reference).

**Table 1.**

| **Device access functions of the device interface layer** | |
|---|---|
| Device_Open_Channel | allocates an identifier (Client_Id) to the caller for use in all requests to the device manager or the devices themselves |
| Device_Close_Channel | removes a client from the device manager's client list |
| Device_Info | retrieves information associated with a device |
| Device_Manager_Info | retrieves the device manager's version |
| Device_Info_List | retrieves a list of available devices |
| Device_Instance_List | retrieves information on all device instances |
| Device_Open_Device | declares a new client to a device |
| Device_Close_Device | removes a client from the device's client list |
| Device_Event | used by a client to signal to a device that the client should be alerted (or should no longer be alerted) of the arrival of unexpected events |
| Device_Call | synchronous device request |
| Device_Io | asynchronous device request |
| Get_On_Event_Info | retrieves information relating to an event |

The EDLI provides equivalents to all device layer functions, so that applications interact only with the EDLI and not with the device layer directly. Names of existing device layer functions will herein be prefixed by 'MhwEdli' to denote the EDLI equivalent function. For example, the EDLI function corresponding to the device layer function Device_Io() is herein referred to as MhwEdliDevice_Io().

Names of functions which are provided by the EDLI but which have no equivalent in the device layer will be prefixed by 'MHEDLI'.

### Device Management via the EDLI

In the present embodiment, the EDLI 3600 does not add functionality to the memory and buffer management functions of the device layer 3700. In other embodiments, for example where the addition of virtual memory management functions is required, the EDLI may be suitably extended.

Some device management functions of the device layer have been described in Table 1 above. The EDLI provides equivalents to these functions, thereby ensuring compatibility with the existing device layer and applications which use it. Additionally, the EDLI provides extended device management functions not present in the existing device layer. Examples of these are the functions MHEDLIStartIo() for invoking an asynchronous device operation, and MHEDLIWaitIO(), which suspends the calling thread whilst waiting for an event pertaining to a previous MHEDLIStartIo() call (for example an event signalling the termination of the device operation initiated by the earlier MHEDLIStartIo() call). The essential functions and basic principles of protection of device access through mutual exclusion and of event management are the same in both sets of device functions. Device functions provided for compatibility with the existing device layer will be referred to henceforth as *compatible device functions.* Other device functions will be referred to as *extended device functions.*

As previously stated, one of the functions of the EDLI is to make device interactions thread-safe. To achieve this, a unique mutual exclusion object (mutex) is locked on entry to device functions and unlocked upon return.

An example of the sequence of events involved in a typical asynchronous device operation request is given below, and illustrates how the mutex is used:
1. A middleware thread calls an EDLI device function.
2. The EDLI device function locks (if possible) the mutex.
3. The EDLI device function calls the equivalent device function in the device layer.
4. The device interface layer initiates the requested operation and returns control to the EDLI.
5. The EDLI unlocks the mutex.
6. While the device layer performs the requested operation, the middleware thread continues to execute.
7. The device operation is completed by the device layer, and an event is triggered.
8. The EDLI locks the mutex, calls the device layer to retrieve the event and unlocks the mutex.
9. The EDLI signals the event to the middleware.
10. The middleware thread calls the EDLI to retrieve the event.

The use of a mutex ensures that no two threads are active within the device layer at the same time. If at any point the mutex cannot be locked, the calling thread is suspended until the mutex becomes available.

The design of the EDLI as described here assumes a device layer which manages device interactions using client identifiers (Client_ID) (see WO 98/43172). Thus, without the EDLI, a middleware thread would initiate an asynchronous device operation by calling the Device_Io() function of the device layer and supplying a client identifier.

Using the EDLI, instead of calling Device_Io() directly, the middleware thread calls the EDLI equivalent MhwEdliDevice_Io() with the client identifier argument. The EDLI stores the client identifier along with a thread identifier identifying the calling thread. It then locks the mutex (or waits until it can do so) and calls Device_Io() in the device layer.

The management of the connections to the device manager 3710 and to the devices themselves is therefore effectively intercepted by the EDLI in order to associate correct thread identifiers with client identifiers. This allows devices to communicate with calling threads using client identifiers without needing to be aware of the multi-threaded nature of the calling environment. It also ensures backwards compatibility of the EDLI with existing device manager implementations.

The EDLI achieves this by creating an association between the thread identifier of the calling thread and the Client_ID provided in the device call. If the EDLI later receives an event for a particular client (as given by the Client_ID), it can determine which thread the event should be forwarded to.

### Event Management

The EDLI ensures the redistribution of events received from the device layer to the correct threads. Specifically, the event manager 7030 (which forms part of the EDLI 3600) ensures that events associated with a particular device call are passed to the correct thread, often the thread having made the original device call. The selection of the correct thread is governed by one of a number of selection policies as will be described later.

There are two main categories of events:
- Expected (or solicited) events. These events result from an asynchronous device request and are therefore expected by the client. Generally, there are two such events which a device may trigger:
   a) End of entry events: These signal that the asynchronous device request has been received and the device is commencing the operation requested.
   b) Exit events: These signal the termination or completion of a device request.
   Other events may also be triggered depending on the circumstances and nature of the device request.
- Unexpected (or unsolicited) events. Such events are not directly related to a device request and are therefore not expected by any client. Examples of unexpected events are those triggered in response to the insertion or removal of a smartcard.

The EDLI is associated with an event receiving thread. This thread receives events raised by the device layer and stores them for later retrieval by the EDLI functions.

The event manager 7030 performs a number of functions within the EDLI. These functions interact with several event management functions supplied by the device layer and by the middleware.

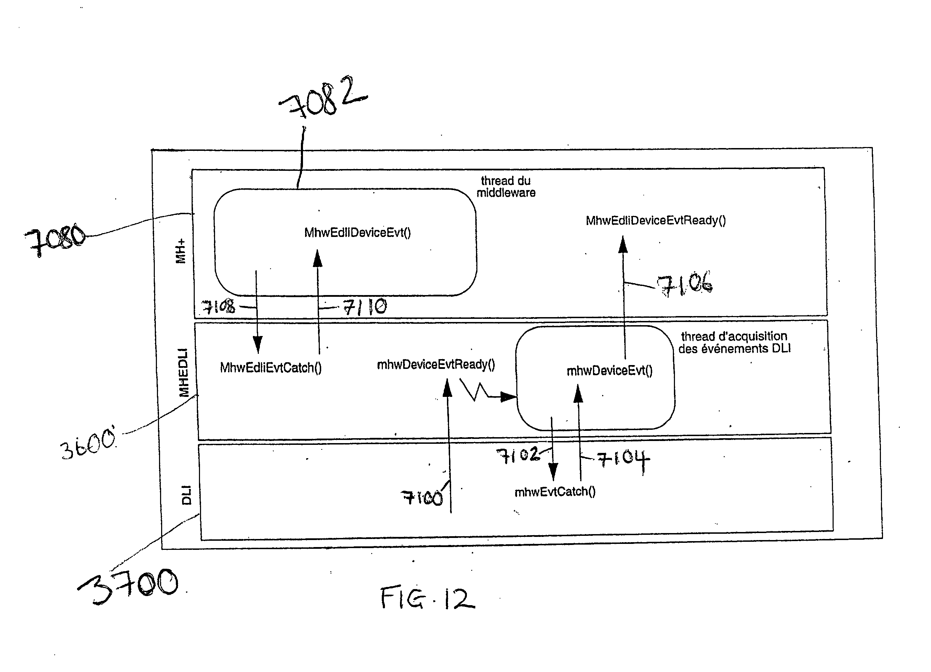

Figure 12 illustrates an example of an event management sequence and shows the interaction of the EDLI 3600 with the device layer 3700 and the middleware, shown collectively as 7080, including a thread 7082 executing on the host processor.

As illustrated in Figure 12, an event travels from the device layer to the middleware via the EDLI 3600. First, the device layer 3700 signals the event's availability to the EDLI. Next, the EDLI requests delivery of the event. Finally, the device layer delivers the event to the EDLI, where it is stored. The same three steps of signalling, request and delivery are repeated to pass the event from the EDLI to the middleware thread.

The six steps of this process are implemented by six functions in the middleware, EDLI and device layer. The EDLI 3600 provides two functions to be called by the device layer:
- mhwDeviceEvtReady(), which signals the availability of an event to the EDLI by waking up the event manager thread and incrementing an event counter; and
- mhwDeviceEvt(), which is concerned with the distribution and processing of events to be sent to the middleware. This function passes the actual event, whose availability will have previously been signalled, to the EDLI.

Similarly, the middleware provides two functions to be called by the EDLI:
- MhwEdliDeviceEvtReady(), which signals the availability of an event to the middleware; and
- MhwEdliDeviceEvt(), which passes the actual event to the middleware.

Finally, the EDLI requests retrieval of an event from the device layer by calling mhwEvtCatch() in the device layer; whilst the middleware requests retrieval of an event from the EDLI by calling the EDLI function MhwEdliCatch(). This latter function returns only those events corresponding to direct calls to MhwEdliDevice_Io() (or MhwEdliDevice_Event()).

Still referring to Figure 12, the following describes in detail the sequence of function calls made by the device layer, the EDLI and the middleware once an event has been triggered by the device layer:
7100. Device layer 3700 calls the callback function mhwDeviceEvtReady() (provided by the EDLI). This signals to the EDLI that a device event has been triggered.
7102. The EDLI's event acquisition thread is activated and makes a call to mhwEvtCatch() in the device layer to request the event.
7104. The device layer calls the mhwDeviceEvt() callback function in the EDLI 3600, passing the event to the EDLI
7106. mhwDeviceEvt() calls MhwEdliDeviceEvtReady() provided by the middleware 7080 after making sure that the event is associated with a MhwEdliDevice_Io() device request (and not a MHEDLIStartIo() device request). This informs the middleware that an event has been triggered.
7108. The middleware calls the function MhwEdliEvtCatch() in the EDLI to request the event.
7110. The EDLI 3600 calls callback function MhwEdliDeviceEvt() provided by the middleware, passing the received event to the middleware thread.

Functions mhwDeviceEvtKeyboardReady(), mhwDeviceEvtKeyboard(), MhwEdliDeviceEvtKeyboardReady() and MhwEdliDeviceEvtKeyboard() are also provided (not shown). These functions relate to events triggered by user interaction with a keyboard or similar input device and operate in a similar way to the event functions described above.

All calls from the EDLI to the device layer are performed under mutual exclusion in the same way as has been described for device interaction functions.

The above description has been given in terms of the compatible device functions. When the compatible device functions are used for interaction with devices, no distinction is made between separate device requests using the same client identifier (Client_Id). The extended device functions work in a similar manner but implement an additional feature whereby events are associated not only with a particular client but also with a particular request. For example, if a thread makes two device requests using the same client identifier, the thread can later retrieve events related to these requests separately. This feature will be referred to as *request identification.*

The main extended device functions are MHEDLIStartIO() for making an asynchronous device request and MHEDLIWaitIO() for retrieving events relating to device requests initiated by a call to MHEDLIStartIO(). Unlike MhwEdliEvtCatch(), which results in a callback function of the middleware being called when an event becomes available, a call to MHEDLIWaitIO() suspends the calling thread until an event becomes available. MHEDLIWaitIO() and MHEDLIStartIO() implement the request identification feature outlined above.

In a preferred embodiment, although the compatible and the extended device functions co-exist, they are not to be mixed. Therefore, MhwEdliEvtCatch() is used to retrieve only those events triggered by a device operation initiated through a MhwEdliDevice_Io() call. Likewise, MHEDLIWaitIo() is used to retrieve only those events associated with a MHEDLIStartIo() call.

The event manager therefore guarantees that the middleware cannot use MhwEdliEvtCatch() calls in place of MHEDLIWaitIO() calls (and vice versa), which could produce unexpected results. This also means that the middleware callback functions are only called for events which have been initiated by the MhwEdliDevice_Io() function.

The sequence of calls in the following scenario is therefore possible:
...
MhwEdliDevice_Io(...);
...
MhwEdliStartIOC...);
...
MhwEdliEvtCatch(...);
...
MhwEdliWaitIO(...);

### Request Management

As has previously been discussed, the extended device functions of the EDLI provide a request identification feature enabling a thread to make several requests and retrieve events for those different requests separately. To achieve this, the EDLI stores information about each device request in such a way that received events may be linked to particular device requests. To ensure compatibility with the existing device layer, the information stored by the EDLI is used in different ways depending on whether a given device transaction uses the compatible or extended device functions.

The management of device requests by the EDLI will now be described in more detail with reference to Figure 13.

The EDLI maintains a request table 7150 in which information relating to all device requests is stored, a client table 7180 storing information on clients (including the client_ID) and a thread table 7190 storing information on all threads involved in device interactions (in an alternative embodiment, it may store information on all running threads). Tables and lists are shown in the figure as having a certain number of entries. This is exemplary only; all tables and lists may at any one time have none, one or more entries.

Every time a device request is made (by either the MHEDLIStartIO() or the MhwEdliDevice_Io() function), the EDLI creates a new entry in the request table, for example entry 7152. Each entry comprises the following pieces of information, including pointers to the thread and client tables:
- An event code. This is supplied as a parameter to the MhwEdliDevice_Io() function. If the request is made through a call to MHEDLIStartIO, the event code value is set to '-1'.
- A request identifier allocated by the EDLI. When the device layer function Device_Io() is called, this request identifier is passed as the event code (in place of the event code supplied as a parameter to the MhwEdliDevice_Io() call).
- A priority value, supplied as a parameter to the MhwEdliDevice_Io() function, and used to prioritise received events.
- A device identifier, supplied as a parameter to the MhwEdliDevice_Io() function.
- A pointer 7154 to the client table 7180, specifically to the client entry 7182 of the client which made the request.
- A pointer 7156 to the thread table 7190, specifically to the thread entry 7192 of the thread which made the request
- A pointer 7158 to the thread table 7190, specifically to the thread entry 7194 of the thread waiting for an event relating to the request (waiting, for example, for the request to be completed). This may or may not be different from the thread which made the request.
- The number of events received which relate to this request
- A pointer 7160 to a list of events 7200. Event list 7200 contains all events received for request 7152 which have not yet been retrieved by the middleware. When a new request is made, and request entry 7152 is first created, event list 7200 will be empty.

If the request was made via a call to MHEDLIStartIO(), then a pointer to the newly created request entry is returned to the calling thread.

Operations are provided for the deletion of request table entries which are no longer required. These cannot be deleted automatically as the EDLI does not know when a device interaction is complete.

The extended functions such as MHEDLIStartIO() and MHEDLIWaitIO are implemented in terms of existing device layer functions so that the EDLI remains compatible with the existing device layer and no modifications to the device layer are required for the correct operation of the EDLI. However, the device layer itself does not identify or distinguish between particular requests per se; however, events are associated with a particular Client_ID and event code. Both are provided by the EDLI to the device layer as arguments of a Device_Io() call. The EDLI provides for request identification by using the event code argument of the Device_Io() function as a request identifier.

Before a device call is passed to the device layer by the EDLI, it generates a unique request identifier and stores it in the newly created request entry 7152. The request identifier is passed to the device layer as the event code argument of the Device_Io() call.

If the request was initiated through a MhwEdliDevice_Io() call, then an event code will have been passed as an argument to that call. This event code is also stored in the request entry 7152, whilst the newly generated request identifier is passed to the device layer in its place.

In the case of a MHEDLIStartIO() call, '-1' is stored in place of the event code, as the MHEDLIStartIO() function does not have an event code argument. This also allows requests made via the compatible and extended device functions to be distinguished later.

When the device layer triggers an event, it includes the event code originally received (via the Device_Io() call) in the event information passed to the EDLI. The EDLI can then use the event code (which is in fact the request identifier) to identify the corresponding request in the request table 7150.

If the device request thus identified was made through a call to MHEDLIStartIo() then the event is added to the event list associated with that request. For example, if request 7152 is identified as the request to which the event relates, then the event is added to event list 7200.

If, however, the request was made through a call to MhwEdliDevice_Io() then the event is handled differently to ensure compatibility with the existing device layer's Device_Io() function, which does not distinguish between different requests. Assuming again that the received event relates to request 7152, then the thread 7192 which made request 7152 is identified by inspecting pointer 7156 in the request entry. The event is added to an event list 7196 associated with thread entry 7192. Alternatively (depending on the chosen event forwarding policy, an aspect which will be discussed later), pointer 7158 may be used to identify thread 7194 which is waiting for events relating to the request (waiting, for example, for the request to complete); and the event may be added to its event list 7198.

Therefore, two kinds of event lists are held by the EDLI:
- those associated with a request initiated by a MHEDLIStartIo() call, for example event list 7200.
- those associated with a thread having made a request by calling MhwEdliDevice_Io(), for example event lists 7196 and 7198.

Reception and storage of events is carried out by the event receiving thread as previously discussed. Once the event has been stored in the appropriate event list, it may be retrieved by the middleware. In the case of an event relating to a device request initiated by a MhwEdliDevice_Io() call, MhwEdliDeviceEvtReady() is called to inform the middleware of the event.

A middleware thread may call MhwEdliEvtCatch() to retrieve an event related to a MhwEdliDevice_Io() device request. When called, the calling thread is identified, and the event list associated with that thread is inspected. As soon as an event becomes available in that event list, it (or the highest priority event if there are more than one) is returned to the caller by calling the MhwEdliDeviceEvt() function provided by the middleware. The original event code (originally supplied as an argument to the MhwEdliDevice_Io() call) is sent to the calling thread in place of the event code used between the EDLI and the device layer as request identifier. In this way, the EDLI remains completely transparent to both the middleware and the device layer.

MHEDLIWaitIO() may be used to retrieve an event related to a MHEDLIStartIO() request. The MHEDLIWaitIO() caller passes the pointer to the request entry previously obtained through a MHEDLIStartIO() call to the EDLI, thus identifying the request for which it wishes to retrieve an event. The relevant entry in the request table is then identified, and the event list associated with that request is inspected. If one or more events are present, the highest priority event is returned to the caller. If not, the calling thread is suspended until an event becomes available. When at a later point an event is received by the EDLI, any thread thus suspended is reawakened, and the event is passed to it.

Keyboard events are treated slightly differently. As previously stated, keyboard event management functions are analogous to general event management functions. However, unlike other device-related events, keyboard events are not necessarily related to a particular device request and hence a particular client.

To enable the event manager to select a thread to which a keyboard event should be forwarded, the MhwEdliWantToReceiveKeyboardEvt() function is provided. By calling this function a thread indicates to the EDLI that future keyboard events are to be sent to the calling thread. Keyboard events later received are then stored in the event queue of the relevant thread, and the function MhwEdliKeyboardEvtReady is called to inform that thread of the keyboard event.

### Event forwarding policies

Embodiments have been described above in which MhwEdliDevice_Io() related events are passed to the thread having originally called MhwEdliDevice_Io(). However, in other embodiments, different event forwarding policies may be used. In a preferred embodiment, a number of different policies are implemented and available to the middleware, which selects the desired policy when initialising the EDLI. This will now be described.

Embodiments of the EDLI may operate in the following environments:
- a single process comprising a single thread: Events are sent to the calling thread in order of priority.
- a single process comprising several threads. Prioritisation is applied on a thread by thread basis after assigning events to threads using one of the following three selection policies:
   a) only solicited events for which the Client_Id has been created by the calling thread are returned to the caller.
   b) only solicited events for which the request was initiated by the calling thread (the Client_Id can therefore have been provided by another thread) are returned to the caller. This effectively means that the thread having initiated a device request by calling MhwEdliDevice_Io() need not be the same as the thread that created the client_Id by calling MhwEdliDevice_Open_Channel().
   c) The first solicited event according to the prioritisation criteria is returned to the caller regardless of the Client_Id. The thread in which the mhwEvtCatch() call was made is not important (there is only one global event queue for all threads).
- Several processes comprising several threads. This is a possible scenario but will not be discussed here.

The MhwEdliDevice_Open_Channel() function can be called by any thread and creates a Client_ID. No event will be returned to a client before MhwEdliDevice_Open_Device() has been called.

Policies a) to c) have different implications for the operation of the EDLI.

In the case of policy a), the EDLI stores an event list for each thread which has called the function MhwEdliDevice_Open_Device() (and has thus registered a Client_Id with a device). In the case of policy b), the EDLI maintains an event list for each thread which has initiated a device request by calling one of the MhwEdliDevice_Call() and MhwEdliDevice_Io() functions. In the case of policy c), the EDLI maintains a single global event list. The distribution of events is here left to the thread which retrieves the event from the EDLI.

Three constants are defined to represent the above event passing policies:
- policy a): MHEDLI_POLICY_LOCAL_CLIENTID
- policy b): MHEDLI_POLICY_REQUEST_CLIENTID
- policy c): MHEDLI_POLICY_ANY_CLIENTID

An initialisation function MhwEdliPolicyInit() is provided in the EDLI for setting the required policy by passing one of the above constants as an argument to the initialisation function. In a preferred embodiment, it is invoked only once and before any EDLI calls are made. The function returns an error code if it has already been invoked, or if an EDLI call has already been made (or if the policy argument is invalid).

Unexpected (or unsolicited) events are treated similarly. Unexpected events include, for example, the removal or insertion of a smartcard. The event manager's behaviour depends on the selected event management policy:
- MHEDLI_POLICY_LOCAL_CLIENTID: the unexpected event is sent to the thread which created the Client_Id (MhwEdliDevice_OpenChannel())
- MHEDLI_POLICY_REQUEST_CLIENTID: the unexpected event is sent to the last thread to have called the MhwEdliDevice_Event() function for this Client_Id and this Device_Id
- MHEDLI_POLICY_ANY_CLIENTID: The unexpected event is sent to the thread having made the first call to the MhwEdliEvtCatch function, irrespective of the calling thread.

In a preferred embodiment, a single policy is set which applies to both expected and unexpected events. In alternative embodiments, separate policies may be set.

In some embodiments, other modes of operation are possible in which the events are stored in as many queues as there are identified threads (that is to say threads that have called any of functions MhwEdliOpen_Device_Channel() and/or MhwEdliDevice_Event() and/or MhwEdliDevice_Call() / MhwEdliDevice_Io() ).

A preferred mode of operation is policy b). Hence, the EDLI defaults to this policy if the policy initialisation function has not been called before the first device interaction occurs.

### Additional features of the EDLI

Features of the EDLI have been described which relate to communication between the multitasking environment of the host processor and the device layer executing on the coprocessor. In a preferred embodiment, the EDLI provides additional features. Specifically, the EDLI provides facilities for communication within the multitasking environment of the host processor, that is to say, communication between threads and / or processes.

An example of this will now be described in terms of communication between processes. However, in this context, the term "process" shall be taken to include any unit of code intended to be executed in parallel with other units of code in a multitasking environment (for example, a thread). In a preferred embodiment, the EDLI operates in a single-process, multi-threaded environment (in the POSIX sense); and the term "process" shall be construed accordingly.

A message passing library is provided as part of the EDLI. This library will be referred to as the MQP. It allows processes running on the same processor to exchange data by a synchronous or an asynchronous mechanism. To achieve this, each process first registers with the MQP entity. The process can then send data (messages) and receive messages to and from other registered processes. The library is thread-safe.

When a process is registered, a new message service is defined (message services will also be referred to simply as services). The same process can define several services. The MQP API (Application Program Interface) allows a process to send to a particular service (managed by another process or by itself) or to set itself to wait for messages arriving for a given service. Each MQP service is related to a process. Child processes created by that process do not inherit the services that it has created.

Each service has associated with it a message queue. Each queue has a limited size, defined at the time when the service is declared by the process.

A message comprises a message type specifier and the message body. The size of the message body is dependent on the message type. Alternatively, some embodiments include a message size specifier in addition to the message type specifier.

The type specifier may be used by a receiver to filter out only those kind of messages in which it is interested.

Data exchange is based on two primitive operations; the receive operation and the send operation:
- Receive: A process having registered a service may effect a receive operation which will put it into a wait state if a message is not available for the service, or will return immediately if a message is available for the service.
- Send: A process may send a message to another service (which may or may not be in wait mode). Two main types of message sending exist: synchronous and asynchronous. In asynchronous mode, the sender immediately regains control. In synchronous mode, the sender is blocked until the receiver (or another process) sends a response.

Many variants exist on the preceding primitives: synchronous sending or receiving with timeout, with priority, across several services, etc. Some implementations provide higher level (application level) messaging libraries based on the basic message passing functions described, for example, Java or C++ libraries.

Furthermore, the EDLI provides an operation allowing a thread to wait for / receive either a message (in the sense of the message passing functionality described here), or an event. A list of message services and a list of device requests are provided by the calling thread as parameters to this operation. The calling thread is then suspended until a message is received from one of the specified message services or an event is received which relates to one of the specified device requests.

Subscription services are provided for communication between message services (which are associated with processes) where the sender and/or the recipient of messages are not known. A router process is provided for managing the subscription services. Typically, a subscription server (which is a message service) creates the subscription service and then sends messages to it by sending messages to the router. The router forwards the messages to all subscribers of the subscription service.

Subscribers are themselves message services managed by processes. They may subscribe to a subscription service by notifying the router. After being notified, the router forwards all messages to the subscriber.

A subscription may have several servers sending messages, and both servers and subscribers may change over time, without such change affecting other servers or other subscribers. Servers and subscribers need not be aware of the receivers or senders of the messages.

Message types can further define classes of recipient within the set of subscribers. For example, a subscriber may filter received messages by type and ignore those types of message which do not relate to the subscriber.

A further library may be provided as part of the EDLI for the management of timers. This library uses the message passing features described above.

Three basic operations are provided:
- Registration: A process or thread must register with the timer library before using its facilities. This also applies to children (threads or processes) of previously registered processes.
- Creation: A process may create a timer. There are three types of timer, which are described below.
- Deletion: A process may delete a previously created timer.

A process, after registering with the timer library, may create a new timer and specify a duration or time for the timer, as well as a message service. A message is then sent to the specified message service once the specified duration has elapsed or the specified time has been reached. The message is sent at a high priority and has a predefined type identifying it as a timer message. The message service may, for example, be a service created and managed by the same process which created the timer. The temporal resolution offered by the interface is one millisecond in a preferred implementation, though other resolutions are possible.

Three types of timers are used:
- Relative timer: A single message is sent when the specified duration has elapsed. The timer is then deleted.
- Repetitive timer: After the specified duration has elapsed, a message is sent and the timer is restarted. Messages are sent repeatedly until the timer is explicitly deleted.
- Absolute timer: A message is sent once a specified absolute time has been reached. The timer is then deleted.

The precise details of the implementation of the various functions described above, and their distribution between hardware and software, are a matter of choice for the implementer and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features and the precise details are left to the implementer. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A receiver/decoder comprising a processor, a co-processor and a communication channel for communication between the processor and the co-processor.

2. A receiver/decoder according to Claim 1, further comprising a device; wherein the co-processor is adapted to run a low-level software process which manages the device; wherein the processor is adapted to run a high-level application adapted to generate a control message; and wherein the communication channel is adapted to transmit the control message from the processor to the co-processor.

3. A receiver/decoder according to Claim 2, wherein the device comprises an audio/visual interface, and the software process comprises an audio/visual manager for managing the audio/visual interface.

4. A receiver/decoder according to Claim 2 or 3, wherein the device comprises a storage medium; and the software process comprises a store manager for managing the storage medium.

5. A receiver/decoder according to any of the preceding claims wherein the processor is adapted to run a plurality of high-level applications concurrently.

6. A receiver/decoder comprising a device; a co-processor for running a low-level software process which manages the device; a processor for running a plurality of high-level applications concurrently, wherein said plurality of high-level applications is adapted to generate a control message; and a communication channel for transmitting the control message from the processor to the co-processor.

7. A receiver/decoder according to Claim 5 or 6, wherein the processor is adapted to run the plurality of high-level applications as a plurality of concurrent software processes.

8. A receiver/decoder according to Claim 7 further comprising means for managing the access of control messages from the plurality of concurrent software processes to the co-processor.

9. A receiver/decoder comprising a co-processor for running a software process; a processor for concurrently running a plurality of software processes adapted to each generate respective control messages; a communication channel for transmitting the control messages from the processor to the co-processor; and means for managing the access of control messages from the plurality of concurrent software processes to the co-processor.

10. A receiver/decoder according to Claim 8 or 9 wherein the means for managing the access of control messages is adapted to prevent the concurrent access of more than a specified number of control messages to the co-processor.

11. A receiver/decoder according to Claim 10 wherein the means for managing the access of control messages comprises a semaphore, preferably a mutex semaphore.

12. A receiver/decoder according to any of Claims 8 to 11, wherein the control messages comprise remote procedure calls.

13. A receiver/decoder according to any of Claims 7 to 12, comprising means for selecting one of the plurality of concurrent software processes; and means for routing an information message from the co-processor to the selected software process.

14. A receiver/decoder according to any of the preceding claims, further comprising a memory shared between the processor and the co-processor.

15. A receiver/decoder comprising a processor for concurrently running a plurality of software processes.

16. A receiver/decoder according to any of the preceding claims, further comprising a multi-tasking real-time operating system for execution on the processor.

17. A receiver/decoder according to Claim 16, wherein the multi-tasking real-time operating system comprises an operating system compatible with at least part of the POSIX standard.

18. A receiver/decoder comprising a processor and a multi-tasking real-time operating system compatible with at least part of the POSIX standard for execution on the processor.

19. A receiver/decoder according to any of the preceding claims, further comprising a storage device and a software process, the software process comprising a device manager for managing the storage device.

20. A receiver/decoder according to Claim 19, further comprising a first software process for managing the recordal of information to the storage device; and a second software process for managing the retrieval of information from the storage device.

21. A receiver/decoder according to any of the preceding claims, further comprising a software process for executing an application of the receiver/decoder.

22. A module for use with a receiver/decoder, comprising means for communicating a control message from one of a plurality of concurrent software processes to a component of the receiver/decoder.

23. A module according to Claim 22, further comprising means for preventing the concurrent communication of more than a specified number of control messages by more than one of the plurality of concurrent software processes to the component.

24. A module according to Claim 22 or 23, wherein the prevention means comprises a semaphore, preferably a mutex semaphore.

25. A module according to any of Claims 22 to 24, wherein the control message is adapted to be communicated to the component by calling a procedure of the component.

26. A module according to any of Claims 22 to 25, further comprising means for communicating an information message from the component to one of the plurality of concurrent software processes.

27. A module according to Claim 26, further comprising means for receiving the information message from the component and means for storing the information message.

28. A module according to Claim 27, wherein the means for receiving the information message comprises means for receiving a notification from the component, and means for requesting the information message from the component in response to the notification.

29. A module according to Claim 27 or 28, wherein the means for storing the information message comprises a plurality of message queues; means for selecting one of the plurality of message queues and means for storing the information message in the selected message queue.

30. A module according to Claim 29, wherein the information message further comprises a reference to said one of the plurality of concurrent software processes as an intended recipient of the information message; and wherein the means for storing the information message further comprises means for selecting one of the plurality of message queues based on the intended recipient.

31. A module according to Claim 29 or 30, wherein the information message further comprises a reference to a previous control message received by the component; and wherein the means for storing the information message further comprises means for selecting one of the plurality of message queues based on the reference to the previous control message.

32. A module according to any of Claims 27 to 31, further comprising means for notifying said one of the plurality of software processes of the receipt of the information message.

33. A module according to any of Claims 26 to 32, further comprising means for receiving a request for the information message from said one of the plurality of concurrent software processes, and means for communicating the information message to said one of the plurality of concurrent software processes in response to the request.

34. A module according to any of Claims 22 to 33, further comprising means for communicating an information message from one of the plurality of concurrent software processes to another of the plurality of concurrent software processes.

35. A module according to Claim 34, further comprising a subscription manager for managing a subscription service to which at least one of the plurality of concurrent software processes subscribes; means for receiving an information message for the subscription service; and means for sending the information message to at least one subscriber of the subscription service.

36. A module according to Claim 35, wherein the subscription manager comprises a routing process for receiving the information message and for sending the information message to at least one subscriber of the subscription service.

37. A module according to any of Claims 22 to 36, further comprising means for managing a timer, and means for sending an information message to one of the plurality of concurrent software processes in response to the timer attaining a defined state.

38. A module according to any of Claims 22 to 37, wherein the component comprises a device manager for managing a device of the receiver/decoder.

39. A module for controlling a receiver/decoder, comprising a module as claimed in any of Claims 22 to 38 and said component.

40. A module for controlling a receiver/decoder, comprising a module for executing an end-user application of the receiver/decoder, and a module as claimed in any of Claims 22 to 39.

41. A module according to Claim 40, wherein the module for executing an end-user application comprises a virtual machine.

42. A receiver/decoder comprising a module as claimed in any of Claims 22 to 41.

43. A receiver/decoder adapted to execute a module as claimed in any of Claims 22 to 41.

44. A computer program product comprising a module as claimed in any of Claims 22 to 41.

45. A signal tangibly embodying a module as claimed in any of Claims 22 to 41.

46. A computer readable medium having stored thereon a computer program product as claimed in Claim 44.

47. A broadcast system, comprising a broadcast centre and a receiver/decoder as claimed in any of Claims 1 to 21, 42 and 43.

48. A method of controlling a component of a receiver/decoder, comprising communicating a control message from one of a plurality of concurrent software processes executing in the receiver/decoder to the component of the receiver/decoder.
